# EUROPÄISCHE PATENTSCHRIFT

(11) **EP 3 481 701 B1**
(45) Veröffentlichungstag und Bekanntmachung des Hinweises auf die Patenterteilung: **09.09.2020**
(21) Anmeldenummer: 17735128.5
(22) Anmeldetag: 04.07.2017
(51) Int. Cl.: B62D 3/12, B21K 1/76

(54) **ZAHNSTANGE UND EIN VERFAHREN ZUR HERSTELLUNG EINER ZAHNSTANGE FÜR EIN LENKGETRIEBE EINES KRAFTFAHRZEUGS**
RACK AND A METHOD FOR PRODUCING A RACK FOR A STEERING GEAR OF A MOTOR VEHICLE
CRÉMAILLÈRE ET PROCÉDÉ DE FABRICATION D'UNE CRÉMAILLÈRE POUR ENGRENAGE DE DIRECTION D'UN VÉHICULE AUTOMOBILE

(30) Priorität: 06.07.2016 DE 102016212303
(43) Veröffentlichungstag der Anmeldung: 15.05.2019
(73) Patentinhaber: thyssenkrupp Presta AG, 9492 Eschen (LI); thyssenkrupp AG, 45143 Essen (DE)
(72) Erfinder: BADER, Reinhard, 6822 Satteins (AT); MAGES, Markus, 6714 Nüziders (AT); ECKSTEIN, Ralf, 9493 Mauren (LI); DOHMANN, Jürgen, 39108 Magdeburg (DE); FEUERSTEIN, René, 6835 Zwischenwasser Muntlix (AT)
(74) Vertreter: thyssenkrupp Intellectual Property GmbH
(86) Internationale Anmeldenummer: PCT/EP2017/066625
(87) Internationale Veröffentlichungsnummer: WO 2018/007379

(56) Entgegenhaltungen:
- EP-A1- 1 316 492
- EP-A1- 1 469 959
- EP-A1- 1 946 865
- WO-A1-2014/037579
- DE-A1-102010 036 609
- JP-A- S59 104 237

## Beschreibung

### Stand der Technik

Die Erfindung betrifft ein Verfahren zum Formen einer Zahnstange für ein Lenkgetriebe eines Kraftfahrzeugs mit einem Verzahnungsabschnitt, der eine sich entlang einer Längsachse erstreckende Verzahnung, die eine quer zur Längsachse gemessene Verzahnungsbreite hat, und einen der Verzahnung gegenüberliegenden, zumindest in seiner Grundform zylindersegmentförmigen Rücken mit einem Rückenradius und eine Rückenbreite aufweist,
bei dem ein zylindrischer Rohling mit einem Rohradius in der Kavität eines in einer Trennebene parallel zur Längsachse geteilten Gesenks umgeformt wird zwischen einem Zahngesenkteil mit einer Zahnformausnehmung zum Formen der Verzahnung und einem Rückengesenkteil mit einer Rückenformausnehmung zum Formen des Rückens, die eine zylindersegmentförmige Grundform mit dem Rückenradius hat,
wobei zur Umformung der Rohling in einer Offenstellung des Gesenks zwischen die bezüglich der Trennebene voneinander beabstandeten Zahn- und Rückenformausnehmungen eingesetzt wird und anschließend das Zahngesenkteil und das Rückengesenkteil in einem Schmiedehub zum Schließen der Kavität in Schließrichtung gegeneinander in eine Schließstellung bewegt werden, wobei der Rückenradius der Rückenformausnehmung größer ist als der Rohradius des Rohlings.

Weiter betrifft die Erfindung eine Zahnstange für ein Lenkgetriebe eines Kraftfahrzeugs mit einem Verzahnungsabschnitt, der eine sich entlang einer Längsachse erstreckende Verzahnung aufweist, wobei die Verzahnung eine Verzahnungsbreite aufweist und das der Verzahnungsabschnitt einen frei umgeformten Grat mit einer Gratbreite aufweist.

In einer Fahrzeuglenkung wird ein Lenkbefehl über das Lenkrad als Drehbewegung in die Lenkwelle eingebracht, auf der ein Ritzel angebracht ist, welches mit einer Verzahnung einer Zahnstange in einem Lenkgetriebe kämmt. Die Zahnstange ist im Lenkgetriebe in axialer Richtung, d.h. in Richtung ihrer Längsachse verschiebbar gelagert, so dass eine Drehung des Ritzels in eine translatorische Bewegung der Zahnstange in deren axialer Längsrichtung umgesetzt wird. An der Zahnstange sind Spurstangen befestigt, welche mit den Achsschenkeln der zu lenkenden Räder verbunden sind, wo die translatorische Bewegung der Zahnstange in einen Lenkeinschlag umgesetzt wird.

Die Zahnstange weist mindestens einen Verzahnungsabschnitt auf, in dem die Verzahnung zum Eingriff des Ritzels in Längsrichtung, d.h. in Richtung der Längsachse der Zahnstange über eine vorgegebene axiale Länge ausgebildet ist, die im Folgenden als Verzahnungslänge bezeichnet wird. Quer zur Längsachse gemessen hat die Verzahnung eine Verzahnungsbreite. Zur sicheren Übertragung großer Kräfte vom Ritzel auf die Zahnstange wird bei einem gegebenen Materialquerschnitt der Zahnstange eine möglichst große Verzahnungsbreite angestrebt.

Die gemäß dem gattungsgemäßen Verfahren hergestellte, spezielle Bauform von Zahnstangen weist einen der Verzahnung bezüglich der Längsachse diametral gegenüberliegenden Zahnstangenrücken auf, im Folgenden kurz Rücken genannt, der zylindersegmentförmig bezüglich einer zur Längsachse parallelen Rückenachse ausgebildet ist, beispielsweise annähernd als Halbzylinder. Im Falle eines annähernd als Halbzylinder ausgeformten Rückenquerschnitts wird diese Bauform auch als D-förmige Zahnstange bezeichnet. Die D-Form wird charakterisiert durch ihren Rückenradius, welcher dem Radius des Querschnitts der zylindrischen Grundform entspricht, d.h. des den Rückenquerschnitt umschließenden Hüllkreises. Als Alternative zur D-Form ist auch ein V-förmiger Rücken möglich, bei dem die V-Schenkelflächen Sekanten des Hüllkreises bilden. Die V-Schenkelflächen laufen zum Rücken hin zusammen. Auch hier umfasst der Rücken einen zylindersegmentförmigen Abschnitt oder kann durch einen zylindersegmentförmigen Hüllkreis umschlossen sein.

Der Rücken weist zumindest eine Lagerfläche auf, auf der die Zahnstange in Richtung der Längsachse verschieblich in dem Lenkgetriebe gelagert ist. Die Lagerflächen liegen bevorzugt auf der D-förmigen Rückenfläche oder den V-Schenkelflächen. Über den Rücken bzw. die Lagerflächen kann mittels einer Andruckvorrichtung auf die Zahnstange eine Andruckkraft quer zur Längsachse ausgeübt werden, welche die Verzahnung in Eingriff gegen das Ritzel andrückt. Die Andruckkraft wird über ein Druckstück in radialer Richtung auf den Rücken übertragen. Bei einer Bewegung der Zahnstange gleitet das Druckstück in Längsrichtung auf dem Rücken. Um dabei eine hohe lokale Belastung bei der Krafteinleitung zu vermeiden, wird ein möglichst großer Rückenradius angestrebt.

Zahnstangen mit D-förmigem Querschnitt werden üblicherweise aus voll- oder hohlzylindrischem stangenförmigen Rohmaterial gefertigt, von dem Rohlinge in der geforderten Länge abgelängt werden, welche in weiteren Bearbeitungsschritten mit der Verzahnung versehen werden. Ein gängiges Umformverfahren zum Formen des Verzahnungsabschnitts ist das gattungsgemäß zugrunde gelegte Schmieden im Gesenk. Das Gesenk zur gattungsgemäßen Herstellung von Zahnstangen weist einen Formhohlraum, auch Kavität genannt, auf, welcher durch Formausnehmungen in beiderseits der Längsachse gegenüberliegenden Gesenkteilen begrenzt wird, die in Schließstellung jeweils an einer parallel zur Längsachse liegenden Trennebene gegeneinander liegen und eine Negativform des Verzahnungsabschnitts einschließen. Gattungsgemäß weist eines der Gesenkteile eine Formausnehmung in Form der Verzahnung, eine sogenannte Zahnformausnehmung, auf und wird deswegen im Folgenden als Zahngesenkteil bezeichnet, und ein weiteres, dem Zahngesenkteil bezüglich der Längsachse diametral gegenüberliegendes Gesenkteil weist eine Formausnehmung, eine sogenannte Rückenformausnehmung, in Form des der Verzahnung an der Zahnstange diametral zur Längsachse der Verzahnung gegenüberliegenden Zahnstangenrückens auf, welches im Folgenden als Rückengesenkteil bezeichnet wird. Zum Schmieden wird das Gesenk zunächst geöffnet, indem das Zahn- und das Rückengesenkteil senkrecht zur Trennebene, quer zur Längsachse, voneinander weg bewegt werden. Dann wird der Rohling zwischen die Zahn- und Rückenformausnehmung eingebracht und das Gesenk mit der Schmiede- bzw. Presskraft beaufschlagt, so dass die Gesenkteile gegeneinander bewegt werden, bis das Gesenk geschlossen ist. Dabei wird das Material des Rohlings, üblicherweise Stahl oder andere warm- oder kaltumformbare Metalle, plastisch verformt und fließt in dem Gesenk, bis die Formausnehmungen der Kavität vollständig ausgefüllt sind. Dadurch ist es möglich, einen Verzahnungsabschnitt mit vorgegebener Zahn- und Rückengeometrie in einem Arbeitsgang rationell zu fertigen.

Der Radius bzw. Durchmesser des Rohlings, als Rohradius bzw. Rohdurchmesser bezeichnet, wird üblicherweise entsprechend dem Schaftdurchmesser der Zahnstange außerhalb des Verzahnungsabschnitts vorgegeben. Gegenüber spanenden Herstellungsverfahren hat Gesenkschmieden den Vorteil, dass an einem zylindrischen Rohling eine im Verhältnis zu seinem Rohradius größere Verzahnungsbreite realisierbar ist, die für eine bessere Kraftübertragung von dem Ritzel auf die Zahnstange vorteilhaft ist. Dies wird beim Schmieden dadurch erreicht, dass der Rohling durch das Zahngesenk radial gestaucht wird, so dass Material in der Zahnformausnehmung in die Breite, d.h. quer zur Längsachse in Richtung der Verzahnungsbreite fließt.

Verfahren zum D-Form-Schmieden sind beispielsweise in der DE 10 2010 036 609 A1 und der WO 2005/053875 A1 beschrieben. Darin wird die Realisierung von relativ großen Verzahnungsbreiten beschrieben. Um den beim Umformen erforderlichen Materialfluss zu erreichen, weisen die Gesenke zusätzliche bewegliche Gesenkteile bzw. Seitenstempel auf und sind entsprechend kompliziert und aufwendig aufgebaut. Außerdem sind die Verzahnungsbreite und der Rückenradius durch die Breite der Kavität, welche dem Durchmesser des Rohlings entspricht, limitiert.

Aus der WO 2014/037579 A1 oder der EP 1 946 865 A1, die die Präambel der unabhängigen Ansprüche zeigen, sind nach Verfahren mit den eingangs genannten Merkmalen bzw. danach gefertigte Zahnstangen bekannt. Dabei ist die Rückenbreite ebenfalls durch den der Fertigung zugrunde liegenden Rohling limitiert. Angesichts der vorangehend erläuterten Problematik ist es eine Aufgabe der vorliegenden Erfindung, den Fertigungsprozess von Zahnstangen zu verbessern, insbesondere das Schmieden einer Verzahnung mit optimierter Querschnittsgeometrie bei geringerem Herstellungsaufwand zu ermöglichen. Ebenfalls soll eine verbesserte Zahnstange bereitgestellt werden.

Gelöst wird die Aufgabe durch ein Verfahren zum Formen einer Zahnstange für ein Lenkgetriebe entsprechend den Merkmalen des Patentanspruchs 1 und durch eine Zahnstange für ein Lenkgetriebe entsprechend den Merkmalen des Patentanspruchs 10. In den Unteransprüchen sind vorteilhafte Weiterbildungen der Erfindung dargestellt.

Zur Lösung der vorgenannten Problematik wird erfindungsgemäß für das eingangs genannte Verfahren vorgeschlagen, dass die Rückenbreite oder die Verzahnungsbreite quer zur Längsachse (L) gemessen breiter ist als der zweifache Rohradius des Rohlings. Dabei ist der Rohradius des Rohlings über die gesamte Länge des Rohlings konstant. Als Rohling wird ein Vollmaterial eingesetzt.

Der Rückenradius der Rückenformausnehmung ist identisch mit dem Rückenradius des Verzahnungsabschnitts der in dem Gesenk umgeformten Zahnstange. Bei einem D-förmigen Rücken entspricht der Rückenradius dem Radius des Zylindersegments, bei einem im Querschnitt V-förmigen Rücken ist der Rückenradius der Radius eines den Rückenquerschnitt umschließenden Hüllkreises.

Bei dem erfindungsgemäßen Verfahren wird ein Gesenk mit einem Rückengesenkteil eingesetzt, dessen Rückenformausnehmung eine zylindersegmentförmige Grundform hat, deren Hüllkreis größer ist als der Durchmesser des Rohlings, d.h. der Rückenradius ist größer als der Rohradius. Beim Schmieden wird der Rohling in Richtung des Schmiedehubs, das entspricht der Schließrichtung der Gesenke, durch das Zahnsegment dermaßen in das Rückengesenk gestaucht, dass das Material in dem Rückengesenk quer zur Längsachse fließt und die relativ zum Rohdurchmesser größere Breite der Rückenformausnehmung ausfüllt. Entsprechend wird ein Rücken mit einem größeren Rückenradius geformt, der insbesondere nicht durch den Durchmesser bzw. Radius des Rohlings limitiert ist.

Durch den relativ zum Rohradius des Rohlings beim Schmieden vergrößerten Rückenradius und die damit einhergehende Vergrößerung der Rückenbreite steht auf der dem Rücken radial gegenüberliegenden Seite, wo durch das Zahngesenkteil die Verzahnung eingeformt wird, eine entsprechend größere Breite für die Verzahnung zur Verfügung. Folglich wird durch die Gestaltung der Zahnformausnehmung eine Verzahnungsbreite realisiert, die entsprechend der quer zur Längsachse gemessenen Breite der Verzahnung größer ist als der Rohradius des Rohlings, und ebenfalls nicht durch den Durchmesser bzw. Radius des Rohlings begrenzt ist.

Das erfindungsgemäße Verfahren ermöglicht so die Einsparung von Material und Nacharbeit zum Abtrennen eines Grates neben der Verzahnung, der entsprechend beim Stand der Technik während des Umformverfahrens entsteht. Zudem kann die Herstellung mit dem erfindungsgemäßen Verfahren mit einem zweiteiligen Gesenk erfolgen, welches einfacher aufgebaut ist als im Stand der Technik beschriebenen Gesenke, die beispielsweise zusätzlich zum Zahn- und Rückengesenkteil bewegbare Seitenstempel aufweisen. Der Fertigungsaufwand wird dadurch verringert.

Das erfindungsgemäße Verfahren kann genutzt werden zur Herstellung von Zahnstangen, bei denen der Rücken D-förmig, d.h. zylindersegmentförmig ausgebildet ist. Entsprechend wird die Rückenformausnehmung im Rückengesenk zylindrisch bzw. zylindersegmentförmig mit dem Rückenradius ausgebildet.

Die Herstellung von Zahnstangen, bei denen der Rücken im Querschnitt V-förmig ausgebildet ist, kann ebenfalls gemäß dem erfindungsgemäßen Verfahren erfolgen. Zur Realisierung der prismenförmigen Anordnung der winkelförmig zueinander liegenden V-Schenkelflächen wird die Rückenformausnehmung entsprechend ebenfalls V-förmig ausgebildet. Der V-förmige Querschnitt, bei dem die V-Schenkelflächen in einer parallel zur Längsachse verlaufenden Kante aneinander angrenzen, wird von einem Hüllkreis mit dem erfindungsgemäß größeren Rückenradius umschlossen, so dass die V-Schenkelflächen im Querschnitt Sekanten des Hüllkreises darstellen. Dabei entspricht der Rückenradius der Rückenformausnehmung des Radius des Hüllkreises, der erfindungsgemäß größer ist als der Rohradius des Rohlings.

Sowohl bei einem D-förmigen, als auch bei einem V-förmigen oder abweichend davon geformten Rücken kann durch das erfindungsgemäße Verfahren eine größere Rückenbreite realisiert werden, die quer zur Längsachse gemessen breiter ist als der Durchmesser, der dem zweifachen Rohradius des Rohlings entspricht. Dadurch kann die Lagerfläche der Zahnstange in dem Lenkgetriebe entsprechend breiter gestaltet werden als im Stand der Technik. Die dadurch realisierbare geringere Flächenpressung auf die Lagerflächen der Zahnstangen-Gleitlagerung in Längsrichtung sorgt für ein verbessertes Gleitverhalten und einen geringeren Verschleiß. Die grundsätzlichen Vorteile eines D- oder V-förmigen Rückens werden durch den erfindungsgemäß breiteren Rücken der Zahnstange weiter verbessert, wobei der Materialeinsatz gleich bleibt und der Umformaufwand kleiner ist als bei den im Stand der Technik beschriebenen Umformverfahren.

Ein weiterer Vorteil des erfindungsgemäßen Verfahrens ist, dass die zum Umformen erforderliche Schmiedekraft, mit der die Gesenkteile gegeneinander gepresst werde, zur Erzeugung einer möglichst großen Rücken- bzw. Verzahnungsbreite kleiner sein kann als im Stand der Technik. Die Umformung eines Rohlings mit einem Rohradius, der kleiner ist als der angestrebte Rückenradius erfordert nämlich eine geringere Schmiedekraft, als wenn der Rohradius des Rohlings im Wesentlichen bereits dem Rückenradius entspricht. Dadurch kann die Fertigung auf kleineren Pressen und energieeffizienter erfolgen.

Bei der Umformung nach dem erfindungsgemäßen Verfahren ist es vorteilhaft, dass der Rohling mindestens einen Übergangsabschnitt aufweist, der in einer Halteeinrichtung gehaltert ist. In dem Übergangsabschnitt, der sich in Richtung der Längsachse an den Verzahnungsabschnitt anschließt, wird der Rohling nicht umgeformt und behält seinen runden Querschnitt mit dem Rohradius, der kleiner ist als der Rückenradius. Bevorzugt sind Übergangsabschnitte in Längsrichtung auf beiden Seiten des Verzahnungsabschnitts angeordnet. Die Halteeinrichtung umgreift jeweils den Übergangsabschnitt und sorgt während des Umformens für eine sichere Verspannung des Rohlings koaxial auf der Längsachse der Zahnstange. Über einen derartigen zylindrischen Übergangsabschnitt kann der Verzahnungsabschnitt mit Schaft-, Gewinde, Lager-, Verbindungs- oder sonstigen Funktionsabschnitten der Zahnstange verbunden sein, die gegebenenfalls in nachgelagerten Bearbeitungsschritten erzeugt werden können.

Eine Weiterbildung des Verfahrens sieht vor, dass die Rückenachse bei der Umformung im Verzahnungsbereich relativ zur Längsachse um einen vorgegebenen Abstand radial in Richtung zum Rücken versetzt wird. Die Rückenachse geht definitionsgemäß durch den Mittelpunkt des Hüllkreises, bildet also die Achse des teilzylindrischen D-förmigen Rückens bzw. des einen V-förmigen Rückens einhüllenden Hüllzylinders. Die Rückenachse wird bei der Umformung des Rückens ausgebildet und verläuft in dem Abstand, der auch als Offset bezeichnet wird, parallel zur Längsachse der Zahnstange, wobei die Rückenachse relativ zur Längsachse in radialer Richtung zur Seite des Verzahnungsabschnitts hin versetzt ist. Dadurch wird ein höheres Biegewiderstandsmoment der Zahnstange erreicht. Durch den verringerten radialen Abstand zur Rückenachse kann eine im Querschnitt tiefer liegende Verzahnung realisiert werden, als dies mit den im Stand der Technik bekannten Gesenken mit Seitenstempeln möglich wäre. Der geringere Achsabstand einer tieferen Verzahnung ermöglicht bei einer relativ großen Verzahnungsbreite einen relativ kleinen Hüllkreis.

Im Ergebnis kann eine erfindungsgemäß mit geringerem Herstellungsaufwand eine leichtere Zahnstange mit höherer Belastbarkeit hinsichtlich der Krafteinleitung durch das Ritzel und einem höheren Biegewiderstandsmoment zur Verfügung gestellt werden, die durch die breitere Rückengeometrie eine bessere Lagerung im Lenkgetriebe ermöglicht.

Mittels des erfindungsgemäßen Verfahrens kann der Rohling bearbeitet werden zur Ausbildung eines sich einstückig in Richtung der Längsachse an den Verzahnungsabschnitt anschließenden Schaftabschnitts. Auf diese Weise kann aus einem Rohling eine einstückige Zahnstange hergestellt werden, bei der sich an den Verzahnungsabschnitt ein oder mehreren Funktionsabschnitte anschließen, beispielsweise ein Schaftabschnitt mit einem Gewindeabschnitt oder einem weiteren Verzahnungsabschnitt zur Einkopplung einer Hilfskraft in die Zahnstange.

Alternativ ist es ebenfalls möglich, dass ein Verzahnungsabschnitt an einem Zahnsegment ausgebildet wird, welches mit zumindest einem weiteren Funktionssegment verbunden wird. Für sogenannte gebaute Zahnstangen werden einzelne Segmente wie Zahn-, Schaft-, Gewinde und/oder weitere Funktionssegmente zunächst separat gefertigt und anschließend mittels geeigneter Fügeverfahren in Längsrichtung zu einer Zahnstange zusammengefügt. Erfindungsgemäß wird ein Zahnsegment dadurch erzeugt, dass ein Segment-Rohling mittels eines erfindungsgemäßen Gesenks mit einer Verzahnung und einem Rücken versehen wird. Entsprechend können die Vorteile des erfindungsgemäßen Verfahrens zur Herstellung einer gebauten Zahnstange genutzt werden.

Bevorzugt erfolgt die Umformung als Warmumformung, insbesondere als Warm- oder Halbwarmschmieden. Dabei wird der Rohling vor dem Einbringen in das Gesenk erwärmt, bei Stahl auf eine Temperatur von 750°C bis 1250°C. Vorteile sind eine leichtere Umformbarkeit mit geringeren Umformkräften. Alternativ kann auch eine Kaltumformung erfolgen, wobei enge Maßtoleranzen und eine erhöhte Materialfestigkeit erreicht werden können.

Es kann vorteilhaft sein, dass ein Rohling vor der Umformung über seine Länge durchgehend maßgenau bearbeitet wird, beispielsweise durch spanende oder nichtspanende Verfahren. Beispielsweise kann eine kreisrunde Querschnittsform durch Fräsen, Schälen, Schleifen, Ziehen, Walzen oder dergleichen hinreichend genau vorgegeben werden, so dass beim Umformen geringe Gratbildung auftritt und entsprechend keine oder nur geringfügige Nachbearbeitung erforderlich ist, und die nicht umgeformten Bereiche außerhalb der Verzahnung nach dem Umformen abhängig von ihrer späteren Funktion ebenfalls nicht oder nur in geringem Maße nachgearbeitet werden müssen.

Weiter wird die Aufgabe durch eine Zahnstange für ein Lenkgetriebe eines Kraftfahrzeugs gelöst, die einen Verzahnungsabschnitt umfasst, der eine sich entlang einer Längsachse erstreckende Verzahnung aufweist, wobei die Verzahnung eine Verzahnungsbreite aufweist und wobei der Verzahnungsabschnitt einen frei umgeformten Grat mit einer Gratbreite aufweist, die Gratbreite gleich oder weniger als 25% der Verzahnungsbreite ist.

Bevorzugt ist die Gratbreite gleich oder weniger als 18%, besonders bevorzugt gleich oder weniger als 10%, der Verzahnungsbreite. Besonders zu bevorzugen sind Gratbreiten von weniger als 5% der Verzahnungsbreite, die mit dem erfindungsgemäßen Verfahren in einfacher Weise dargestellt werden können.

Bevorzugt umfasst die Zahnstange, deren Verzahnungsabschnitt sich entlang einer Längsachse erstreckt und die in Bezug zur Längsachse gegenüberliegend zum Verzahnungsabschnitt einen zylindersegmentförmigen Rücken mit einem Rückenradius R aufweist, weiterhin einen Übergangsabschnitt, dessen Radius r kleiner als der Rückenradius R ist.

Bevorzugt kann die Gratbreite größer als 0,5% der Verzahnungsbreite ausgebildet sein.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Lenksystem für ein Kraftfahrzeug
- Figur 2: eine erfindungsgemäß hergestellte Zahnstange,
- Figur 3: ein Schaftsegment-Halbzeug beim Durchlaufhärten,
- Figur 4: ein Schaftsegment-Halbzeug beim Durchlaufschleifen,
- Figur 5: ein Schaftsegment-Halbzeug beim Durchlaufwirbeln zur Herstellung eines Gewinde-Halbzeugs,
- Figur 6: Ablängen eines Gewindesegments von einem Gewinde-Halbzeug gemäß Figur 5,
- Figur 7: ein Verzahnungsabschnitt-Halbzeug beim Durchlaufschleifen,
- Figur 8: ein Verzahnungsabschnitt-Halbzeug beim Durchlaufschälen,
- Figur 9: Ablängen eines Zahnsegment-Rohlings von einem Zahnsegment-Halbzeug gemäß Figur 7 oder Figur 8,
- Figur 10: eine schematische Ansicht quer zur Längsachse eines Gesenks in geöffnetem Zustand, vor der Umformung,
- Figur 11: das Gesenk wie in Figur 10 in einem nachfolgenden Verfahrensschritt in teilweise geschlossenem Zustand,
- Figur 12: das Gesenk wie in Figur 11 in einem nachfolgenden Verfahrensschritt in geschlossenem Zustand,
- Figur 13: das Gesenk wie in Figur 12 in einem nachfolgenden Verfahrensschritt in wieder geöffnetem Zustand, nach der Umformung,
- Figur 14: das fertige Zahnsegment gemäß Figur 13 in einer Ansicht quer zur Längsrichtung in Richtung der Breite der Verzahnung (in Richtung der Verzahnungsbreite),
- Figur 15: das fertige Zahnsegment gemäß Figur 13 in einer Ansicht quer zur Längsrichtung auf die Verzahnung (in Richtung der Höhe),
- Figur 16: ein Querschnitt X1-X1 durch das Gesenk gemäß Figur 11,
- Figur 17: ein Querschnitt X2-X2 durch das Gesenk gemäß Figur 12,
- Figur 18: ein Querschnitt X3-X3 durch das Gesenk gemäß Figur 13,
- Figur 19: ein Querschnitt Y3-Y3 durch das Gesenk gemäß Figur 13,
- Figur 20: ein Zahnsegment in einer zweiten Ausführung in einer Ansicht quer zur Längsrichtung in Richtung der Breite der Verzahnung, analog zu Figur 19,
- Figur 21: ein Querschnitt C-C durch das Gesenk gemäß Figur 20,
- Figur 22: ein Zahnsegment in einer dritten Ausführung in einer Ansicht quer zur Längsrichtung in Richtung der Breite der Verzahnung, analog zu Figur 19,
- Figur 23: ein Querschnitt D-D durch das Gesenk gemäß Figur 22,
- Figur 24: ein Zahnsegment beim Durchlaufhärten,
- Figur 25: ein Gewindesegment und ein Zahnsegment vor dem Einspannen in eine Spannvorrichtung,
- Figur 26: ein Gewindesegment und ein Zahnsegment in einer Spannvorrichtung vor dem Reibschweissen,
- Figur 27: ein Gewindesegment und ein Zahnsegment in einer Spannvorrichtung nach dem Reibschweissen,
- Figur 28: Schematisiertes Härteprofil der erfindungsgemäßen Reibschweissverbindung,
- Figur 29: ein Zahnsegment in perspektivischer Darstellung,
- Figur 30: eine gebaute Zahnstange in einer alternativen Ausführungsform,
- Figur 31: eine Zahnstange in einer weiteren alternativen Ausführungsform mit V-Rücken,
- Figur 32: eine Zahnstange gemäß Figur 31 in einer perspektivischen Schnittdarstellung,
- Figur 33: eine Zahnstange mit V-Profil in einer alternativen Ausführungsform,
- Figur 34: Querschnitt durch ein Gesenk mit eingelegtem Halbzeug vor dem Schmieden analog der Figur 16,
- Figur 35: Querschnitt durch ein Gesenk gemäß Figur 34 nach dem Schmieden,
- Figur 36: eine erfindungsgemäß hergestellte Zahnstange in einer weiteren Ausführungsform in perspektivischer Darstellung,
- Figur 37: Zahnstange gemäß Figur 36 in einer Ansicht quer zur Längsrichtung in Richtung der Breite der Verzahnung,
- Figur 38: Zahnstange in einer alternativen Ausführungsform ähnlich Figur 37.

### Ausführungsformen der Erfindung

In den verschiedenen Figuren sind gleiche Teile stets mit den gleichen Bezugszeichen ver-sehen und werden daher in der Regel auch jeweils nur einmal benannt bzw. erwähnt.

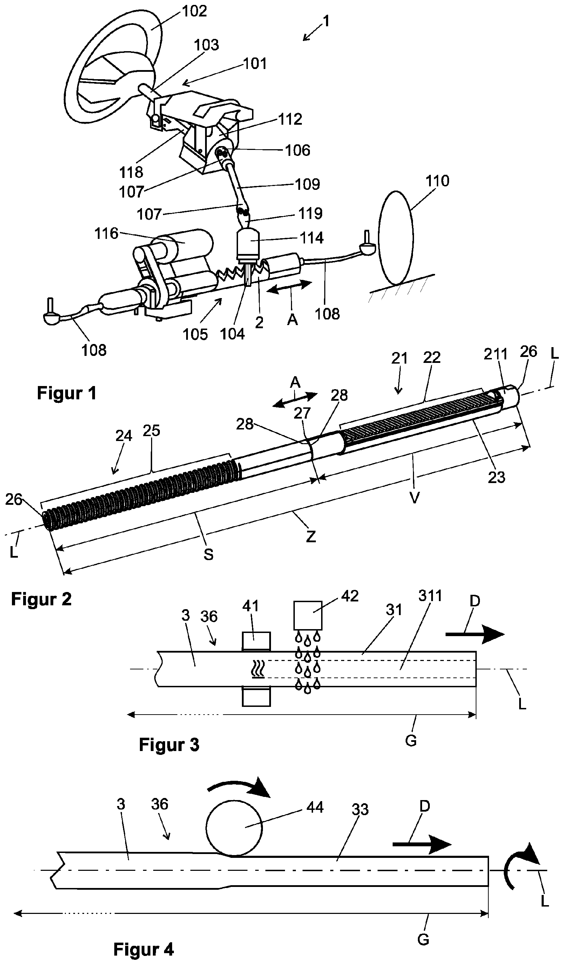

Figur 1 zeigt eine schematische perspektivische Darstellung einer Kraftfahrzeuglenkung 1, wobei in eine Lenkwelle 101 vom Fahrer über ein Lenkrad 102 ein Drehmoment als Lenkmoment eingebracht werden kann. Das Lenkmoment wird über die Lenkwelle 101 auf ein Lenkritzel 104 übertragen, welches mit einer Zahnstange 2 kämmt, die dann ihrerseits über entsprechende Spurstangen 108 den vorgegebenen Lenkwinkel auf die lenkbaren Räder 110 des Kraftfahrzeugs überträgt. Zusammen mit der Zahnstange 2 bildet das Lenkritzel 104 ein Lenkgetriebe 105. Das Lenkgetriebe 105 weist ein hier nicht dargestelltes Gehäuse auf, in dem das Lenkritzel 104 drehbar und die Zahnstange 2 in der Längsrichtung A, auch axiale Richtung A genannt, in beide Richtungen längsverschieblich gelagert ist, was mit dem Doppelpfeil angedeutet ist.

Eine elektrische und/oder hydraulische Hilfskraftunterstützung kann in Form einer Hilfskraftunterstützung 112, alternativ auch einer Hilfskraftunterstützung 114 beziehungsweise 116, entweder mit der Lenkwelle 1, dem Lenkritzel 104 beziehungsweise der Zahnstange 2 gekoppelt sein. Die jeweilige Hilfskraftunterstützung 112, 114 oder 116 trägt ein Hilfsdreh-moment in die Lenkwelle 1, das Lenkritzel 104 und/oder eine Hilfskraft in die Zahnstange 2 ein, wodurch der Fahrer bei der Lenkarbeit unterstützt wird. Die drei unterschiedlichen in der Figur 1 dargestellten Hilfskraftunterstützungen 112, 114 und 116 zeigen alternative Positionen für deren Anordnung. Üblicherweise ist nur eine einzige der gezeigten Positionen mit einer Hilfskraftunterstützung belegt. Das Hilfsdrehmoment oder die Hilfskraft, welches bzw. welche zur Unterstützung des Fahrers mittels der jeweiligen Hilfskraftunterstützung 112, 114 oder 116 aufgebracht werden soll, wird unter Berücksichtigung des von einem Drehmomentsensor 118 ermittelten Eingangsdrehmoments bestimmt, der in der Hilfskraftunterstützung 112 oder 114 angeordnet sein kann.

Die Lenkwelle 1 weist eine mit dem Lenkrad 102 verbundene Eingangswelle 103 und eine mit dem Lenkritzel 104 verbundene Ausgangswelle 106 auf.

Die Ausgangswelle 106 ist über ein Gelenk 107, welches als Universal- bzw. Kreuzgelenk ausgebildet ist, mit einer Welle 109 verbunden, die eine Zwischenwelle der Lenkwelle 101 bildet und die über ein weiteres, gleichartig aufgebautes Gelenk 107 mit einer Eingangswelle 119 des Lenkgetriebes 105 verbunden ist.

Die Zahnstange 2 des Lenkgetriebes 105 ist freigestellt in Figur 2 gezeigt. Daraus geht hervor, dass die Zahnstange 2 stangenförmig ausgebildet ist mit einer in axialer Richtung A langgestreckten, zylindrischen Grundform, welche eine Längsachse L aufweist. Die axiale Richtung A , in der die Zahnstange 2 in dem Lenkgetriebe 105 längsverschieblich gelagert ist, liegt parallel zur Längsachse L.

Die Zahnstange 2 weist einen Verzahnungsabschnitt 21 auf, der auf einer Seite mit einer Verzahnung 22 versehen ist, die sich in Längsrichtung A erstreckt. Die der Verzahnung bezüglich der Längsachse L diametral gegenüberliegende Seite ist als Zahnstangenrücken 23 ausgebildet, im Folgenden kurz Rücken 23 genannt.

Weiterhin weist die Zahnstange 2 einen Schaftabschnitt 24 auf, der in dem in Figur 2 gezeigten Beispiel ein Gewinde 25 aufweist und auch als Gewindeabschnitt 24 bezeichnet wird. In dem Lenkgetriebe 105 ist auf das Gewinde 25 eine nicht dargestellte Spindelmutter aufgeschraubt, die von der Hilfskraftunterstützung 116 um die Längsachse L drehend antreibbar ist, wodurch zur Lenkunterstützung eine Kraft in Längsrichtung A auf die Zahnstange 2 aufgebracht werden kann.

Zur Bildung eines Kugelumlauftriebs, bei dem die Spindelmutter als Kugelumlaufmutter ausgebildet ist, kann das Gewinde 25 hinsichtlich des Gewindeprofils und der Materialeigenschaften optimiert sein als zum Abwälzen der Kugeln, beispielsweise durch Härten des Stahls, aus dem der Schaftabschnitt 24 gefertigt ist.

Der Verzahnungsabschnitt 21 und der Schaftabschnitt 24 weisen äußere, in Längsrichtung voneinander abgewandte freie Enden 26 auf, welches die Enden der Zahnstange 2 bilden, an welche die Spurstangen 108 angeschlossen werden können.

Die Zahnstange 2 ist erfindungsgemäß eine gebaute Zahnstange, bei der der Verzahnungsabschnitt 21 mit der Verzahnung 22 und der Schaftabschnitt 24 mit dem Gewinde 25 in einer Fügestelle 27 an ihren in axialer Richtung einander zugewandten Enden mit ihren Stirnflächen, im Folgenden als Fügeflächen 28 bezeichnet, miteinander verbunden sind, beispielsweise durch Schweißverfahren wie Reibschweißen.

In dem in Figur 2 dargestellten fertigen Zustand hat die Zahnstange 2 entlang der Längsachse L gemessen eine Länge Z, die sich zusammensetzt aus der Schaftabschnitt-Länge S und der Verzahnungsabschnitt-Länge V, jeweils gemessen vom freien Ende 26 bis zur Fügestelle 27. Bevorzugt kann der Verzahnungsabschnitt 21 und der Schaftabschnitt 24 aus einem Vollmaterial gefertigt sein.

Aufgrund der Ausbildung der Zahnstange 2 aus einzelnen Segmenten, ist es möglich, die Durchmesser der Rohteile für den Schaftabschnitt und den Verzahnungsabschnitt unterschiedlich auszulegen. Dadurch können Materialeinsparungen auch ohne die Verwendung von hohlen Rohmaterialien (Rohren) erreicht werden.

Vorteilhaft wird der Schaftabschnitt und der Verzahnungsabschnitt aus einem Vollmaterial gebildet, da das Ausgangsprodukt preiswerter ist, die Fertigung einfacher ist und die Nachbearbeitung, einschließlich des Härtens mit weniger Risiken verbunden ist.

Weiter können aufgrund der Ausbildung der Zahnstange aus einzelnen Segmenten, der Verzahnungsabschnitt und der Schaftabschnitt aus verschiedenen Werkstoffen gebildet werden. Bevorzugt wird der Verzahnungsabschnitt beispielsweise aus den Stahlsorten SAE1040 oder 37CrS4 nach DIN EN 10083 und der Schaftabschnitt aus dem Vergütungsstahl C45 nach DIN EN 10083 gebildet.

Zur Herstellung einer gebauten Zahnstange 2 müssen zunächst vorgefertigte Segmente bereitgestellt werden, die anschließend mit ihren Fügeflächen 28 an der Fügestelle 27 zusammengefügt werden. Im Folgenden wird erläutert, wie mit dem erfindungsgemäßen Verfahren die Herstellung einer gebauten Zahnstange 2 durch eine erfindungsgemäße Bearbeitung der Segmente besonders rationell erfolgen kann.

Die Herstellung eines Segments erfolgt ausgehend von einem Segment-Rohmaterialstück 3, welches auch kurz als Rohmaterialstück 3 bezeichnet wird, oder im Hinblick auf den weiteren Verwendungszweck beispielsweise als Schaft-Rohmaterialstück oder Verzahnungs-Rohmaterialstück. Ein Rohmaterialstück 3 kann bereitgestellt werden als Stangenmaterial, beispielsweise mit rundem Querschnitt, beispielsweise aus gewalztem oder stranggezogenem Stahl. Die Stücklänge G des Rohmaterialstücks 3 kann im Prinzip beliebig groß sein, in der Praxis werden bei einem Durchmesser in der Größenordnung von 20 bis 40 mm Stücklängen G im Bereich von 2 m bis 10 m angeboten. Dies ist ein Vielfaches der Länge Z einer Zahnstange 2 bzw. der Länge S eines Schaftabschnitts 24 oder der Länge V eines Verzahnungsabschnitts 21, die zwischen etwa 0,1 m und 0,5 m beträgt.

Wenn besondere Anforderungen an die Materialhärte gestellt werden, wird zur Herstellung des Schaft- oder Verzahnungsabschnitts gehärteter Stahl verwendet. Erfindungsgemäß kann das Härten erfolgen, wie in Figur 3 schematisch dargestellt: Ein Rohmaterialstück 3 aus härtbarem Stahl, beispielsweise ein Schaft-Rohmaterialstück, wird bereitgestellt und auf der Längsachse L ausgerichtet. Parallel zur Längsachse L wird es längs in Durchlaufrichtung D bewegt, wie in Figur 3 mit dem Pfeil angedeutet. Dabei wird es durch eine Durchlauf-Erwärmungseinrichtung 41 hindurchgeführt, beispielsweise durch die Spulenanordnung einer Induktions-Heizvorrichtung. In der Durchlauf-Erwärmungseinrichtung 41 erfolgt ein Durchlauferwärmen, bei dem der Stahl bis über seine Austenitisierungstemperatur erwärmt wird. In Durchlaufrichtung D schließt sich eine Durchlauf-Kühleinrichtung 42 an, durch die das erwärmte Rohmaterialstück 3 ebenfalls im kontinuierlichen Durchlauf hindurchbewegt wird. Dabei erfolgt beispielsweise durch ein gasförmiges und/oder flüssiges Kühlfluid ein kontrolliertes Durchlaufkühlen, wodurch der Stahl gehärtet wird, folglich wird ein Durchlaufhärten realisiert. Die Prozessparameter wie Temperaturen sowie Aufheiz- und Abkühldauer und -geschwindigkeit werden in Abhängigkeit von der eingesetzten Stahlsorte und den durch das Härten angestrebten Materialeigenschaften vorgegeben. Nach dem Durchlaufkühlen in der Durchlauf-Kühleinrichtung 42 liegt ein gehärtetes Segment-Halbzeug 31 vor, welches weiteren Bearbeitungsschritten zugeführt werden kann. Wie im Beispiel der Figur 3 dargestellt, besitzt das Segment-Halbzeug nach der Härteoperation bevorzugt einen zylindrischen Kernbereich 311, der keine Aufhärtung gegenüber dem Ausgangsmaterial des Rohmaterialstücks 3 erfahren hat.

Ein Vorteil des Durchlaufhärtens ist, dass ein gehärtetes Schaftsegment-Halbzeug 31 bereitgestellt wird, welches im Wesentlichen die Stücklänge G des Rohmaterialstücks 3 hat, die einem Vielfachen der Länge Z der Zahnstange bzw. der Schaftabschnittlänge S oder der Verzahnungsabschnitt-Länge V entspricht. Dadurch kann eine rationellere Fertigung als im Stand der Technik erfolgen, bei dem es üblich ist, das Rohmaterial vor dem Härten auf eine Segmentlänge Is abzulängen.

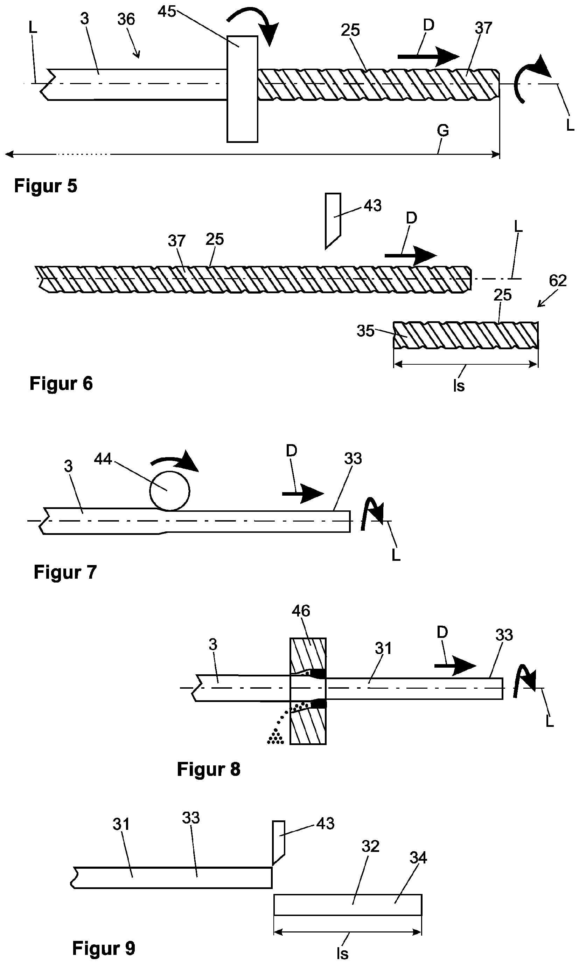

Von dem gehärteten Schaftsegment-Halbzeug 31, welches die Stücklänge G hat, können gehärtete Segmente 32, welche eine Segmentlänge Is haben, mittels einer Trenneinrichtung 43 einfach abgelängt werden. Dies ist schematisch in Figur 9 dargestellt. Dadurch, dass die Stücklänge G ein Vielfaches der Segmentlänge Is eines gehärteten Segments 32 beträgt, kann rationell eine entsprechend große Anzahl von Segmenten 32 erzeugt werden. Die gehärteten Segmente 32 können mit weiteren Segmenten verbunden oder als Segment-Rohlinge genutzt werden, die in weiteren Bearbeitungsschritten gemäß ihrem Verwendungszweck, beispielsweise als Schaft-, Verbindungs- oder sonstige Funktionssegmente bearbeitet werden.

Zur Herstellung einer Zahnstange 2 kann es erforderlich sein, ein Segment mit hoher Maßgenauigkeit im Profil bereitzustellen. Das im Stand der Technik übliche Schleifen von Segment-Rohlingen, welche bereits auf Segmentlänge Is gekürzt sind, ist umständlich und aufwendig.

Um die Herstellung rationeller zu gestalten, wird das erfindungsgemäße Verfahren vorgeschlagen, welches schematisch in Figur 4 dargestellt ist. Dabei wird ein Schaft-Rohmaterialstück 3, welches eine Stücklänge G hat, beispielsweise ein Schaft-Rohmaterialstück, bereitgestellt und auf der Längsachse L ausgerichtet. Parallel zur Längsachse L wird es längs in Durchlaufrichtung D bewegt, wie in Figur 4 mit dem Pfeil angedeutet. Dabei wird es durch eine Durchlauf-Schleifeinrichtung 44 hindurchgeführt, während dessen es um die Längsachse L rotiert wird, wie mit dem gebogenen Pfeil angedeutet. Dadurch wird das Rohmaterialstück 3 über seine gesamte Stücklänge G mittels Durchlaufschleifens durchgehend maßgenau rund geschliffen und verlässt die Durchlauf-Schleifeinrichtung 44 in Durchlaufrichtung D als maßgenau geschliffenes Segment-Halbzeug 33.

Das maßgenau geschliffene Segment-Halbzeug 33 hat dieselbe Stücklänge G wie das ursprüngliche, dem Durchlaufschleifen zugeführte Rohmaterialstück 3. Von diesem geschliffenen Segment-Halbzeug 33 können mittels einer Trenneinrichtung 43, wie in Figur 9 für ein gehärtetes Segment-Halbzeug 31 dargestellt, einfach maßgenau rund geschliffene Segmente 34 abgelängt werden. Dadurch, dass die Stücklänge G des Segment-Halbzeugs 33 ein Vielfaches der Segmentlänge Is eines geschliffenen Segments 34 beträgt, kann rationell eine entsprechend große Anzahl von Segmenten 34 erzeugt werden. Die Segmente 34 können als Segment-Rohlinge genutzt werden, die in weiteren Bearbeitungsschritten gemäß ihrem Verwendungszweck, beispielsweise als Schaft-, Verbindungs- oder sonstige Funktionssegmente bearbeitet werden.

Alternativ zu einem Segment-Rohmaterialstück 3 ist es denkbar und möglich, ein gehärtetes Segment-Halbzeug 31 gemäß dem in Figur 4 dargestellten Durchlaufhärten im Durchlaufschleifen zu bearbeiten. Im Ergebnis wird ein maßgenau geschliffenes, gehärtetes Segment-Halbzeug 33 mit der Stücklänge G erzeugt, von dem rationell mehrere Segmente 34 abgelängt werden können.

In Figur 5 und Figur 6 ist schematisch dargestellt, wie durch das erfindungsgemäße Verfahren ein als Gewindesegment 35 ausgebildetes Schaftsegment rationell herzustellen. Hierzu wird ein Schaft-Rohmaterialstück 36 bereitgestellt, welches wie für die vorangehenden Ausführungen beschrieben eine Stücklänge G hat, die einem Mehrfachen der Schaftabschnitt-Länge S entspricht. Wenn ein Schaftabschnitt 24 als Gewindeabschnitt ausgebildet ist mit einem über seine Länge durchgehenden Gewinde 25, entspricht die Gewindelänge in axialer Richtung A der Schaftabschnitt-Länge S.

In Figur 5 ist eine Wirbeleinrichtung 45 dargestellt, in die in Durchlaufrichtung D ein Segment-Rohmaterialstück 3 mit der Stücklänge G eingeführt wird. Mittels eines schnell rotierenden Wirbelkopfes wird in der Wirbeleinrichtung in das in Durchlaufrichtung D bewegte und dabei langsam rotierte Segment-Rohmaterialstück 3 fortschreitend ein Gewinde 25 eingeschnitten, welches sich in axialer Richtung A kontinuierlich über die gesamte Stücklänge G erstreckt. Durch dieses Gewindewirbeln im Durchlaufverfahren, auch kurz als Durchlaufwirbeln bezeichnet, wird ein Gewinde-Halbzeug 37 erzeugt, welches dieselbe Stücklänge G hat wie das Segment-Rohmaterialstück 3.

Von dem Gewinde-Halbzeug 37 können mittels einer Trenneinrichtung 43 jeweils Gewindesegmente 35 abgelängt werden, die jeweils eine Segmentlänge Is haben. Dadurch, dass die Stücklänge G des Gewinde-Halbzeugs 37 ein Vielfaches der Segmentlänge Is der Gewindesegmente 35 beträgt, kann rationell eine entsprechend große Anzahl von Gewindesegmenten 35 erzeugt werden. Die Gewindesegmente 35 können mit weiteren Segmenten verbunden werde, beispielsweise mit einem Zahnsegment, oder als Segment-Rohlinge genutzt werden, die in weiteren Bearbeitungsschritten gemäß ihrem Verwendungszweck bearbeitet werden.

Figur 7 zeigt, wie ein Segment-Rohmaterialstück 3, beispielsweise zur Herstellung eines Verzahnungsabschnitts 21, mittels einer Durchlauf-Schleifeinrichtung 44 in einem kontinuierlichen Durchlauf-Schleifvorgang über seine gesamte Stücklänge G rund auf Maß geschliffen werden kann. Alternativ ist es möglich, das Segment-Rohmaterialstück 3 mittels einer Schäl-einrichtung 46, wie in der Figur 8 dargestellt, ebenfalls im Durchlauf über seine gesamte Stücklänge G auf Maß zu bearbeiten, um ein maßgenaues Segment-Halbzeug 33 zu erzeugen. Im Gegensatz zur Darstellung der Schaft-Rohmaterialstücke 3, werden Verzahnungs-Rohmaterialstücke 32 nicht gehärtet, um eine nachfolgende Umformung nicht zu erschweren. Entsprechend wird das Verzahnungs-Rohmaterialstück 32 direkt nach der Bearbeitung mittels Schleifen (Figur 7) oder Schälen (Figur 8) auf die geforderte Länge Is getrennt, bevorzugt mittels Sägen.

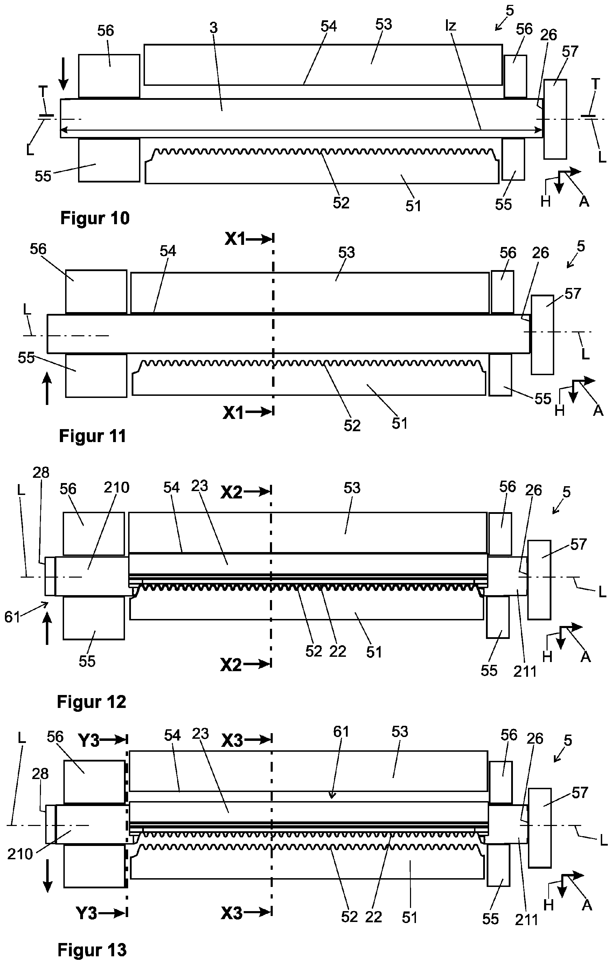

Figuren 10 bis 13 zeigen schematisch Momentaufnahmen eines Gesenks 5 in aufeinanderfolgenden Schritten des erfindungsgemäßen Verfahrens. Die Ansicht, d.h. die Blickrichtung, ist dabei quer zur Längsachse L (die parallel zur Längsrichtung A liegt) in Breitenrichtung B, senkrecht zur Höhenrichtung H. Die Breitenrichtung B ist definiert durch die Richtung, die orthogonal zur Stirnschnittebene SE der Verzahnung 22 ausgerichtet ist. Im Fall einer Geradverzahnung ist die Breitenrichtung B durch die Richtung definiert, in der sich die Verzahnung 22 quer zur Längsachse L mit ihrer Verzahnungsbreite b erstreckt. Die Höhenrichtung H ist definiert durch die radiale Richtung, welche senkrecht zur Längsachse L und senkrecht zur Breitenrichtung B senkrecht vom Rücken 23 durch die Verzahnung 22 einer Zahnstange 2 geht.

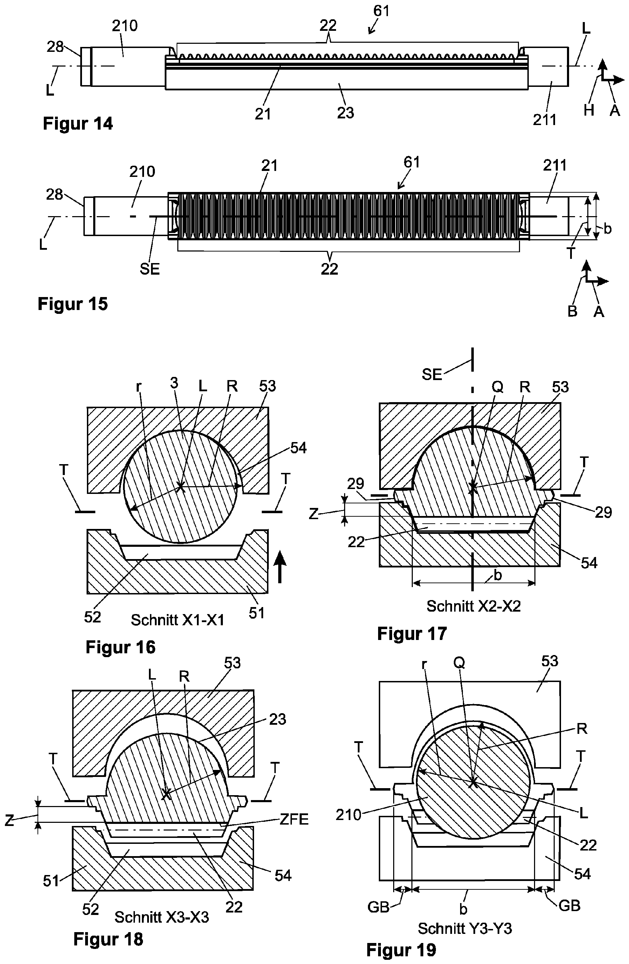

Das Gesenk 5 umfasst ein Zahngesenkteil 51 mit einer Zahnformausnehmung 52, welche geformt ist als Negativabdruck der Verzahnung 22, und einem Rückengesenkteil 53 mit einer Rückenformausnehmung 54. Das Gesenk 5 ist in einer Trennebene T getrennt, die sich parallel zur Längsachse L in der Breitenrichtung B erstreckt. Die Rückenformausnehmung 54 ist als Negativform des Rückens 23 ausgebildet, und im dargestellten im Wesentlichen halbzylindrisch geformt mit einem Rückenradius R, wie deutlich in der Querschnittdarstellung von Figur 16 erkennbar ist. Es ist ebenfalls denkbar und möglich, dass der Rücken ein gotisches Querschnittsprofil aufweist, mit zwei konvex gewölbten Abschnitten, die winklig zueinander stehen. In Längsrichtung A, d.h. parallel zur Längsachse L, sind beiderseits benachbart zum Zahngesenkteil 51 obere Halteeinrichtungen 55 (in der Darstellung unten) und benachbart zum Rückengesenkteil 53 untere Halteeinrichtungen 56 (in der Darstellung oben) angeordnet. In Längsrichtung auf einer den Gesenkteilen 52, 53 abgewandten Seite ist neben den Halteeinrichtungen 55, 56 ein Endanschlag 57 angeordnet.

Zur Durchführung des erfindungsgemäßen Verfahrens wird ein zylindrisches Segment-Rohmaterialstück 3, im Folgenden auch kurz als Rohling 3 bezeichnet, mit der Segmentlänge Iz breitgestellt, auf Schmiedetemperatur - je nach Verfahren 750° C bis 1250°C - erwärmt, und zwischen die in geöffneter Stellung voneinander beabstandete Zahnformausnehmung 52 und die Rückenformausnehmung 53 eingesetzt. Durch Einspannen zwischen den Halteeinrichtungen 55 und 56 erfolgt eine definierte radiale Fixierung der Längsachse L des Rohlings 3 relativ zum Gesenk 5. Mit dem freien Ende 26 wird der Rohling 3 in Längsrichtung A gegen den Endanschlag 57 angeschlagen, wodurch der Rohling 3 axial, d.h. in Richtung der Längsachse L positioniert wird.

Aus dem geöffneten Zustand gemäß Figur 10 wird das Rückengesenkteil 53 wie in Figur 10 mit dem Pfeil angedeutet entgegen der Höhenrichtung H bewegt, bis die Rückenformausnehmung 54 rückseitig - in den Zeichnungen von oben - an dem Rohling 3 anliegt, wie in Figuren 11 und 16 dargestellt. Der Schnittdarstellung von Figur 16 ist entnehmbar, dass der zylindrische Rohling 3 einen Rohradius r hat, der wie erfindungsgemäß gefordert kleiner ist als der Radius der Rückenformausnehmung 54, der Rückenradius R. Entsprechend liegt die Rückenformausnehmung 54 zunächst nur linienförmig im Rückenbereich am Außenumfang des Rohlings 3 an. Das Rückengesenkteil 53 befindet sich nun in Schmiedeposition.

Im nächsten Schritt wird der Schmiedehub durchgeführt, wobei das Zahngesenkteil 51 in Höhenrichtung H, senkrecht zur Längsachse L, zahnseitig gegen den Rohling 3 bewegt wird - in der Zeichnung nach oben - wie in Figur 11 und 12 mit dem Pfeil angedeutet. Dabei erfolgt die Umformung des Rohlings 3, indem das Material, bevorzugt Stahl auf Schmiedetemperatur, plastisch verformt wird, wobei das Material fließt und die Kavität zwischen dem Rückengesenkteil 53 und dem Zahngesenkteil 51 ausfüllt. Dadurch wird die Rückenformausnehmung 54 rückseitig in dem Rohling 3 abgeformt, so dass der Rücken 23 mit dem Rückenradius R ausgebildet wird, und auf der bezüglich der Längsachse L gegenüberliegenden Seite wird zahnseitig durch die Zahnformausnehmung 51 die Verzahnung 22 eingeformt, so dass der Verzahnungsabschnitt 21 ausgebildet wird. Auf diese Weise ist der Rohling 3 in ein Zahnsegment 61 umgeformt worden, welches einen Verzahnungsabschnitt 21 mit der Verzahnung 22, dem Rücken 23 sowie sich an den Verzahnungsabschnitt 21 anschließenden Übergangsabschnitte 210 und 211 aufweist. Die Verzahnung 22 umfasst eine Zahnfußebene ZFE. Die Übergangsabschnitte 210 und 211 sind beim Schmieden nicht verformt worden und behalten folglich denselben Rohradius r und die Längsachse L wie der Rohling 3. Am freien Ende des Übergangsabschnitts 210 befindet sich stirnseitig die Fügefläche 28, wo ein Schaftsegment, beispielsweise in Form eines Gewindesegments 35, angefügt werden kann.

Im Querschnitt ist die Endposition des Schmiedehubs in Figur 17 in dem Querschnitt X2-X2 durch den Verzahnungsabschnitt 21 gezeigt. Darin ist erkennbar, dass die Stauchung in Höhenrichtung H, senkrecht zur Längsachse L, beim Schmieden so groß ist, dass im Verzahnungsabschnitt 21 Material zwischen dem Zahngesenkteil 51 und dem Rückengesenkteil 53 in der Trennebene T unter Bildung von in der Breite B vorstehenden Graten 29 mit einer Gratbreite GB bezüglich der Längsachse L seitlich in Breitenrichtung B hinausgepresst wird. Die Graten 29 sind von der Zahnfußebene ZFE in einem Gratabstand Z in Höhenrichtung H beabstandet. Der Gratabstand Z ist der geringste Abstand, gemessen in Höhenrichtung H, zwischen der Zahnfußebene ZFE und dem Randbereich des jeweiligen Grates 29. Der Randbereich des jeweiligen Grates 29 ist durch den frei umgeformten Bereich gebildet. Um die Verzahnung 22 bei der Umformung besonders gut auszubilden, weist der Gratabstand Z bevorzugt einen Wert auf, der kleiner ist als 20% des Rückenradius R. Besonders bevorzugt weist der Gratabstand Z einen Wert auf, der kleiner ist als 15% des Rückenradius R. Ganz besonders bevorzugt weist der Gratabstand Z einen Wert auf, der kleiner ist als 5% des Rückenradius R. Dadurch, dass die frei umgeformten Grate nah an der Zahnfußebene ZFE ausgebildet sind, lässt sich ein verbessertes Fließverhalten bei der Umformung und eine verbesserte Gefügeausbildung der Verzahnung 22 erreichen.

Der Rückenradius R definiert im Verzahnungsabschnitt 21 eine Rückenachse Q, um die sich der Rücken 23 mit seiner halb- bzw. teilzylindrischen Form koaxial erstreckt. Durch die beim Umformen bewirkte Stauchung und das damit einhergehende Fließen in Breitenrichtung B erhält der Rücken eine dem zweifachen Rückenradius R entsprechende Rückenbreite (2 x R), in Breitenrichtung B gemessen. Die dem Rücken 23 gegenüberliegende Verzahnung 22 erhält durch das Umformen eine Verzahnungsbreite b in Breitenrichtung B. Bevorzugt wird eine nutzbare Verzahnungsbreite b, auch Zahnfußbreite genannt, erzeugt, die im Wesentlichen der Rückenbreite (2 x R) entspricht. Dadurch erfolgt eine optimale radiale Abstützung der Verzahnung 22 durch den Rücken 23 und ein hohes Biegewiderstandsmoment wird realisiert.

Sowohl die Rückenbreite (2 x R) als auch die Verzahnungsbreite b sind dank des erfindungsgemäßen Verfahrens größer, als der Rohdurchmesser (2 x r) des Rohlings 3, der dem doppelten Rohradius entspricht. Dadurch wird die Krafteinleitung vom Lenkritzel 104 in die Verzahnung 22 verbessert. Außerdem kann eine optimierte Lagerung des relativ zum Rohling 3 verbreiterten Rückens 23 im Lenkgetriebe 105 realisiert werden.

Nach dem Schmiedehub werden das Rückengesenkteil 53 und das Zahngesenkteil 51 in einer dem Schmiedehub entgegengesetzten Rückhubbewegung wieder auseinander gefahren, wie in Figur 13 dargestellt und mit den Pfeilen angedeutet. Dadurch ist das Gesenk 5 wieder geöffnet, wie in Figur 10 gezeigt. In dieser Stellung kann das fertige Zahnsegment 61 aus dem Gesenk 5 entnommen werden, und ein neuer Rohling 3 eingelegt werden, wie in Figur 10 dargestellt.

Das fertige Zahnsegment 61 ist in Figur 14 in einer Seitenansicht quer zur Längsachse L in Breitenrichtung B gezeigt, also parallel zur Verzahnung 22 in Richtung der Verzahnungsbreite b, und in Figur 15 in einer Draufsicht auf die Verzahnung 21 quer zur Längsachse L, also entgegen der Höhenrichtung H.

Aus den in den Figuren 16 bis 19 gezeigten Querschnitten, insbesondere aus Figur 19, geht hervor, das die Längsachse L, welche die Achse des Rohlings 3 und nach dem Umformen entsprechend die Achse des Übergangsabschnitts 210 bildet, übereinstimmt mit der Rückenachse Q, die mit dem Rückenradius R koaxial von dem Rücken 23 umgeben ist. Diese koaxiale Anordnung ist deutlich in Figur 19 dadurch erkennbar, dass der Rohradius r und der Rückenradius R sich auf dieselbe Achse L bzw. Q beziehen.

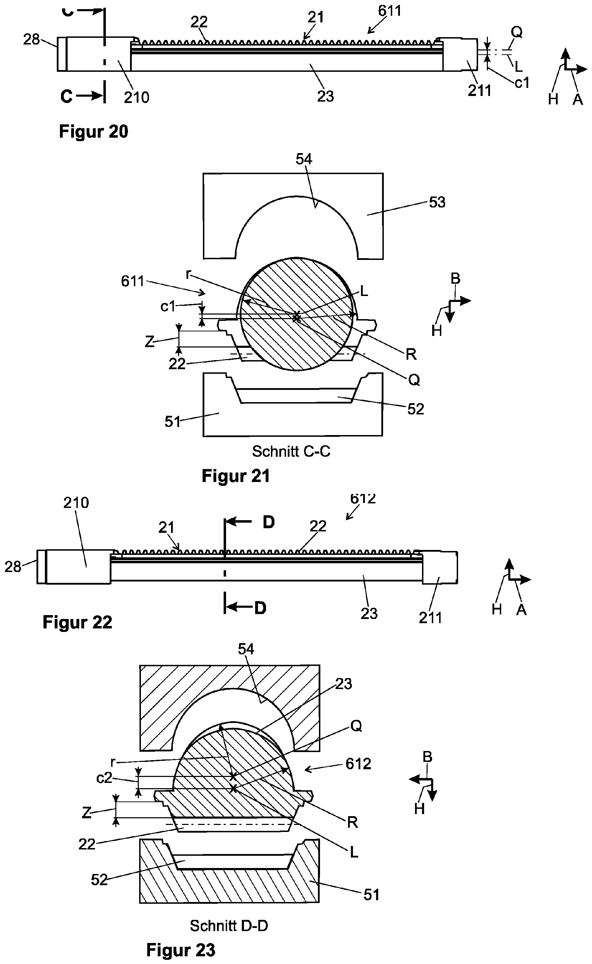

Eine zweite Ausführungsform eines erfindungsgemäßen Zahnsegments 611 ist in Figur 20 in einer Seitenansicht entsprechend Figur 14, und im Schnitt C-C durch den Übergangsabschnitt 210 analog zu Figur 19 dargestellt. Im Unterschied zum Zahnsegment 61 ist hierbei die Rückenachse Q gegenüber der Längsachse L radial in Richtung auf die Verzahnung 21 zu parallel versetzt, und zwar um einen Abstand c1, der als Offset bezeichnet wird. Der Offset c1 entspricht im gezeigten Beispiel der Differenz der Radien R-r, ist also größer als null, und kann als positiver Offset bezeichnet werden. Im Querschnitt gesehen schließt der Rücken 23 in radialer Richtung am untersten Punkt mit dem Umfang des Übergangsabschnitts 210 ab. Entsprechend liegt die Verzahnung 22 in radialer Richtung um die Differenz (R-r) näher zum Außenumfang des Übergangsabschnitts 210, oder ist mit anderen Worten weniger tief in den Querschnitt des Zahnsegments 61 eingeformt, als bei der ersten Ausführung gemäß Figur 14.

Eine dritte Ausführungsform eines erfindungsgemäßen Zahnsegments 612 ist in Figur 22 in einer Seitenansicht entsprechend Figur 14, und in Figur 23 im Schnitt D-D durch den Verzahnungsabschnitt 21 analog zu Figur 18 dargestellt. Wiederum ist wie bei der zuletzt beschriebenen Ausführung des Zahnsegments 611 die Rückenachse Q gegenüber der Längsachse L versetzt, und zwar um einen Abstand bzw. Offset c2. Der Offset c2 ist in dieser Ausführung größer als die Radiendifferenz (R-r), so dass der Übergangsabschnitt 210 im Querschnitt über den Rücken 23 vorsteht, wie in der Schnittdarstellung von Figur 23 erkennbar ist. Der Offset c2 ist im gezeigten Beispiel so gewählt, dass die Verzahnung 22 in Höhenrichtung H mit dem Umfang des Übergangsabschnitts 210 bündig abschließt. Die Verzahnung 22 liegt bezüglich der Längsachse L höher als bei der zweiten Ausführung des Zahnsegments 611.

Dank des erfindungsgemäßen Verfahrens kann bei Bedarf ein Offset c1 oder c2 durch eine entsprechende Gestaltung des Gesenks 5 einfach realisiert werden. Im Einzelnen kann dies dadurch erreicht werden, dass der radiale Versatz zwischen den Halteeinrichtungen 55 und 56, die die Lage der Längsachse L fixieren, und dem Zahngesenkteil 51 und dem Rückengesenkteil 53, welche durch die Ausformung des Rückens 23 die Lage der Rückenachse Q bestimmen, entsprechend der Radiendifferenz (R-r) eingestellt wird. Auf diese Weise kann mit einem relativ einfach aufgebauten Gesenk 5 die Tiefe der Verzahnung 22 entsprechend den jeweiligen Anforderungen im Lenkgetriebe 105 realisiert werden.

Ein weiterer Vorteil des erfindungsgemäßen Verfahrens besteht auch darin, dass Insbesondere auch mit weniger Materialeinsatz eine Zahnstange dargestellt werden kann, weil die Radiendifferenz keinen Abfall verursacht. Dadurch kann der Materialeinsatz verringert werden, auch wenn der Rohling aus einem Vollmaterial gebildet ist.

Mit Vorzug wird in diesem Verfahren eine Zahnstange für ein Lenkgetriebe eines Kraftfahrzeuges dargestellt, die einen Verzahnungsabschnitt 21 aufweist, der sich entlang der Längsachse L erstreckt und die in Bezug zur Längsachse L gegenüberliegend zum Verzahnungsabschnitt 21 einen zylindersegmentförmigen Rücken 23 mit einem Rückenradius R aufweist, wobei weiter ein zylindrischer Übergangsabschnitt 201, 211 am Verzahnungsabschnitt 21 ausgebildet ist, dessen Radius r kleiner als der Rückenradius R ist. Bevorzugt ist ein Radienunterschied im Bereich von 3% bis 7% in Bezug auf den Rückenradius R. Besonders bevorzugt liegt ein Radienunterschied im Bereich von 4,5% bis 6,5%. Hiermit lassen sich gute Ausformungen bei gleichzeitig vorteilhaften Materialeinsparungen darstellen.

Das erfindungsgemäße Verfahren bringt noch einen weiteren wesentlichen Vorteil: Zum Einsatz einer Zahnstange, die einen im Beispiel dargestellten Verzahnungsabschnitt aufweist, in einem Lenkgetriebe sind eine Vielzahl von Parametern einzuhalten. Beispielsweise soll der die Zahnstange einbeschriebene Durchmesser möglichst klein sein, um Bauraum zu sparen. Insbesondere soll die Gratbreite GB, die sich beidseits der Verzahnungsbreite ausbildet, beschränkt bleiben. Dabei ist es gewünscht, die mechanische Nachbearbeitung zu begrenzen. Insbesondere kann durch das vorgeschlagene Verfahren die beiden Grate 29 mit einer jeweiligen Gratbreite GB mit weniger als 25% der Verzahnungsbreite b dargestellt werden, ohne dass eine mechanische Nachbearbeitung erfolgen muss. Bevorzugt ist eine jeweilige Gratbreite von weniger als 18% der Verzahnungsbreite. Durch die Optimierung der Parameter im Werkzeug können jeweilige Gratbreiten GB von weniger als 10% oder besonders bevorzugt von maximal 5% der Verzahnungsbreite b erreicht werden. Damit ist es nicht erforderlich, die Grate 29, die beim Umformen beidseits der Verzahnung entstehen, zu entfernen, wodurch die mechanische Nachbearbeitung des Verzahnungsabschnitts 21 reduziert werden kann.

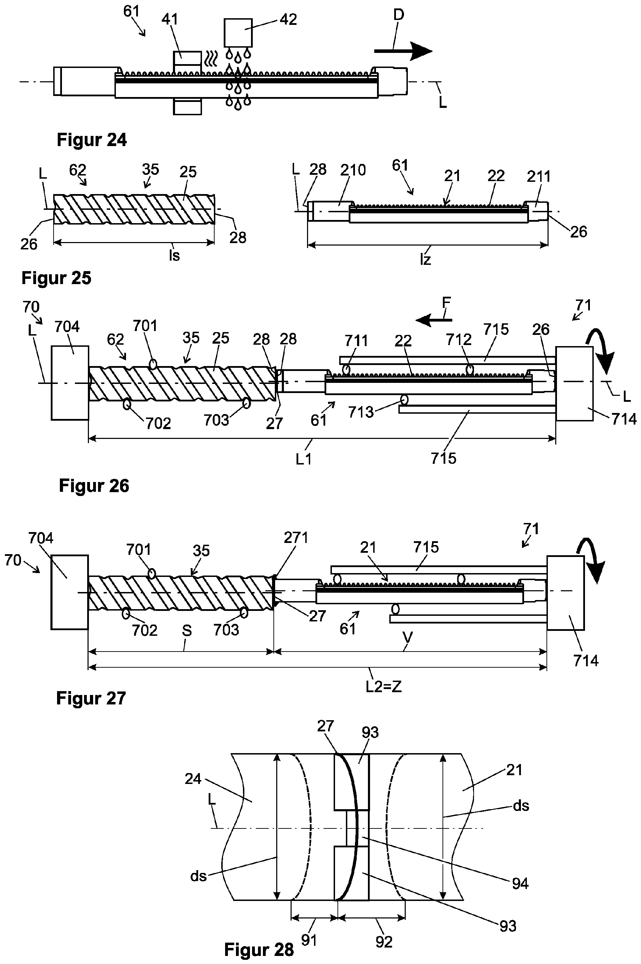

Nach dem Schmieden kann ein Zahnsegment 61 (oder 611 bzw. 612) im Durchlaufverfahren gehärtet werden, wie in Figur 24 gezeigt. Dabei wird das Zahnsegment 61 parallel zur Längsachse L durch eine Durchlauf-Erwärmungseinrichtung 41 und einer dieser in Durchlaufrichtung D nachgeschaltete Durchlauf-Kühleinrichtung 42 hindurchbewegt. Durch entsprechende Wahl der thermischen und zeitlichen Parameter kann der Stahl gehärtet werden, wie dies im Prinzip bereits weiter oben zu Figur 3 für ein Schaftsegment-Halbzeug 31 beschrieben ist. Dadurch kann für die im Betrieb zu erwartenden Beanspruchungen optimierte Härte eingestellt werden.

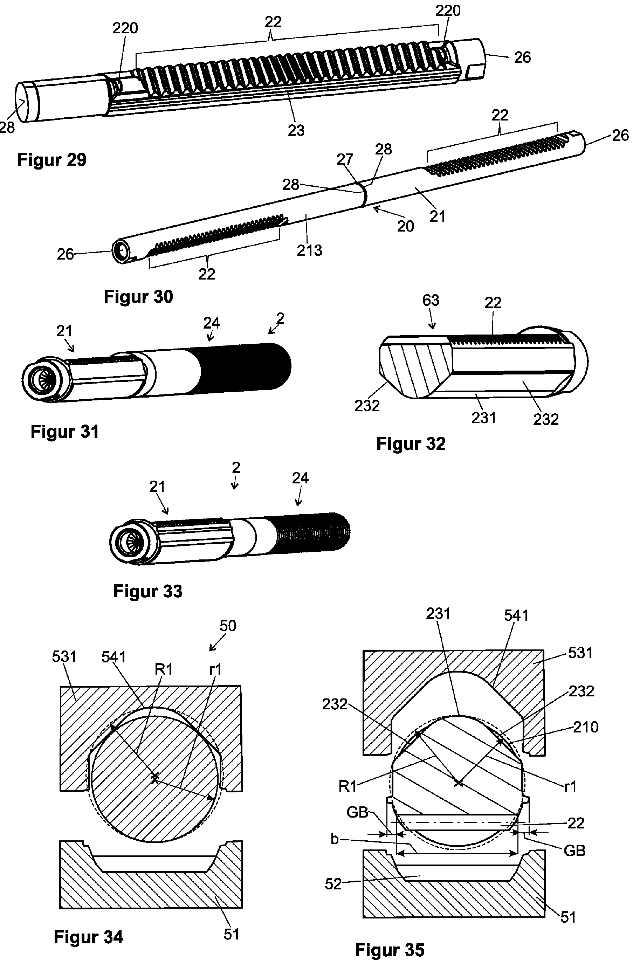

Figur 32 zeigt ein Zahnsegment 63, welches einen V-förmigen Rücken 231 hat, kurz V-Rücken 231 genannt. Die V-Form wird durch zwei V-Schenkelflächen 232, die von der Verzahnung 22 aus gesehen zum Rücken 231 hin winklig zusammenlaufen.

Der V-Rücken 231 ist im Querschnitt umschlossen von einem Hüllkreis mit dem Rückenradius R1, wie der Schnittdarstellung von Figur 35 entnehmbar ist. Die V-Schenkelflächen 232 umfassen Sekanten des Hüllkreises, der in Figur 35 gestrichelt eingezeichnet ist.

An die Verzahnung 22 schließt sich ein Übergangsabschnitt 210 an, wie bei der oben zu Figur 10 bis Figur 24 beschriebenen D-förmigen Ausführungsform. Der Übergangsabschnitt 210 hat einen Radius r1, der dem Rohradius r1 des Rohlings 3 gemäß Figur 34 entspricht.

Das Schmieden kann gemäß dem erfindungsgemäßen Verfahren in einem Gesenk 50 erfolgen, wie im Schnitt in Figur 34 analog zu Figur 16 und in Figur 35 analog zu Figur 18 oder Figur 23 dargestellt ist. Das Zahngesenkteil 51 des Gesenks 50 gleich aufgebaut wie in den oben beschriebenen D-förmigen Ausführungen des Gesenks 5. Abweichend davon hat das Rückengesenkteil 531 eine im Querschnitt V-förmige Rückenformausnehmung 541.

Figur 34 ist entnehmbar, wie ein Rohling 3 mit Rohradius r1 zwischen das Rückengesenkteil 531 und das Zahngesenkteil 51 eingelegt wird. Der Hüllkreis der Rückenformausnehmung 541 mit dem Rückenradius R1 ist gestrichelt eingezeichnet. Es ist erkennbar, dass in dem nicht umgeformten Rohzustand der Rohling 3 mit dem im Vergleich zum Rückenradius R1 kleineren Rohradius r1 das Gesenk 5 in der Breitenrichtung B nicht ausfüllt, und der Rohling 3 nicht koaxial im Hüllkreis liegt.

Figur 35 zeigt das aus dem Rohling 3 geschmiedete fertige Zahnsegment 63. In diesem Ausführungsbeispiel liegen der Rücken 231 mit seinem Hüllkreis und der Übergangsabschnitt 210 koaxial zur Längsachse L, d.h. die Radien r1 und R1 beziehen sich auf die Längsachse L, wie für einen D-förmigen Rücken 23 in dem Ausführungsbeispiel gemäß Figuren 10 bis 19. Es ist allerdings auch denkbar und möglich, nach Maßgabe der Anforderungen des Lenkgetriebes für einen V-Rücken 231 einen Offset vorzugeben, wie in den Ausführungen gemäß Figuren 20, 21 oder Figuren 22, 23.

Figuren 31 und 32 zeigen Ausführungen von Zahnstangen 2 mit unterschiedlichen Durchmesserverhältnissen von Verzahnungsabschnitt 21 und Schaftabschnitt 24, wobei der Schaftabschnitt 24 gemäß Figur 31 einen größeren Durchmesser hat.

Ein Vorteil des erfindungsgemäßen Schmiedeverfahrens zur Herstellung eines Zahnsegments 61, 611, 612 oder 63 ist, dass zur Umformung eines Rohlings 3 mit im Vergleich zum Rückenradius R (bzw. R1) kleineren Rohradius r (bzw. r1) kleinere Schmiedekräfte erforderlich sind, als wenn der Rohradius dem Rückenradius entspricht, wie im Stand der Technik.

In analoger Weise, wie oben bereits für den D-förmigen Rücken ausgeführt, ergeben sich dieselben Vorteile, in Bezug auf die Gratbreite und die Verhältnisse des Rückenradius R1 im Verhältnis zum Rohradius r1.

Mit Vorzug wird in diesem Verfahren eine Zahnstange für ein Lenkgetriebe eines Kraftfahrzeuges dargestellt, die einen Verzahnungsabschnitt 21 aufweist, der sich entlang der Längsachse L erstreckt und die in Bezug zur Längsachse L gegenüberliegend zum Verzahnungsabschnitt 21 einen zylindersegmentförmigen Rücken 23 mit einem Rückenradius R1 aufweist, wobei weiter ein zylindrischer Übergangsabschnitt 201, 211 am Verzahnungsabschnitt 21 ausgebildet ist, dessen Radius r1 kleiner als der Rückenradius R1 ist. Bevorzugt ist ein Radienunterschied im Bereich von 3% bis 7% in Bezug auf den Rückenradius R1 bezogen. Besonders bevorzugt ist ein Radienunterschied im Bereich von 4,5% bis 6,5%.

Auch in dieser Ausführungsform mit dem V-Rücken kann die jeweiligen Gratbreite GB mit weniger als 25% der Verzahnungsbreite b dargestellt werden, ohne dass eine mechanische Nachbearbeitung erfolgen muss. Auch hier ist entsprechend bevorzugt, eine jeweilige Gratbreite von weniger als 20% der Verzahnungsbreite oder mehr bevorzugt von weniger als 15% oder besonders bevorzugt von maximal 10% der Verzahnungsbreite b zu erreichen.

In den Figuren 25 bis 27 ist ein erfindungsgemäßes Verfahren zur Herstellung einer Zahnstange 2 dargestellt, bei dem Schaftsegments, hier ein Gewindesegment 35, mit einem Zahnsegment 61 mittels Reibschweißen gefügt wird.

Das Gewindesegment 35 kann beispielsweise gefertigt werden, wie vorangehend zu Figur 5 und Figur 6 beschrieben. Das Gewindesegment 35 hat in Richtung der Längsachse L eine Segmentlänge Is und weist auf einer Stirnseite eine Fügefläche 28 auf.

Das Zahnsegment 61 kann beispielsweise mittels eines Verfahrens zur Verfügung gestellt werden, wie es vorangehend anhand der Figuren 10 bis 23 oder Figuren 36 bis 40 beschrieben ist. das Zahnsegment 61 hat eine Segmentlänge Iz und weist auf einer Stirnseite ebenfalls eine Fügefläche 28 auf.

Das Gewindesegment 35 wird in eine Spanneinrichtung 70 eingespannt und koaxial auf der Längsachse L ausgerichtet, wie in Figur 26 dargestellt. Die Spanneinrichtung 70 weist Spannelemente 701, 702 und 703 und ein Widerlager 74 auf. Die Spannelemente 701, 702 und 703 liegen derart von außen zwischen den Gewindegängen des Gewindes 25 an, dass eine definierte Ausrichtung auf der Längsachse L gewährleistet ist. Dabei bildet das Gewinde 25 eine Referenzfläche. Mit seinem freien Ende 26 stützt sich das Gewindesegment 35 in axialer Richtung gegen das Widerlager 704 ab, wodurch eine exakte axiale Positionierung in Richtung der Längsachse L erreicht wird.

Das Zahnsegment 61 wird in eine Spanneinrichtung 71 eingespannt und koaxial auf der Längsachse L ausgerichtet. Die Spanneinrichtung 71 weist Spannelemente 711, 712 und 713 auf. Die Spannelemente 711 und 712 liegen auf der Verzahnung 22 an, das Spannelement 713 an dem Rücken 23. Dadurch bilden die Funktionsflächen der Verzahnung 22 bzw. des Rückens 23 Referenzflächen, die exakt auf der Längsachse L ausgerichtet werden.

Mit seiner Fügefläche 28 liegt das Zahnsegment 61 gegen die Fügefläche 28 des Gewindesegments 35 an. Mit seinem freien Ende 26 stützt sich das Zahnsegment 61 in axialer Richtung gegen ein Druckstück 714 ab, welches über Verbindungselemente 715 mit den Spannelementen 711, 712 und 713 der Spanneinrichtung 71 starr und drehfest relativ zur Längsachse L verbunden ist.

Die Spanneinrichtung 71 ist von einer nicht dargestellten Antriebseinrichtung um die Längsachse L drehend antreibbar, wie mit dem gebogenen Pfeil angedeutet. Mittels einer ebenfalls nicht dargestellten Anpresseinrichtung kann eine Anpresskraft F in Richtung der Längsachse L auf die Spanneinrichtung 71 ausgeübt werden, wie mit dem Kraftpfeil eingezeichnet ist, und mit der die Fügefläche 28 eines eingespannten Zahnsegments 61 in Richtung der Längsasche L axial gegen die Fügefläche 28 des in die Spannvorrichtung 70 eingespannten Gewindesegments 35 angepresst werden kann. Die Fügeflächen 28 stehen dadurch in Reibkontakt miteinander.

Nach dem Einspannen wird das Spanneinrichtung 71 relativ zur Spanneinrichtung 70 positioniert, so dass das Gewindesegment 35 und das Zahnsegment 61 mit ihren Fügeflächen 28 gegeneinander anliegen, das Gewindesegment 35 axial an dem Widerlager 704 anliegt, und das Zahnsegment 61 an dem Druckstück 714 anliegt. Folglich ist der Gesamtabstand, der sogenannte Startabstand L1 zwischen dem Druckstück 714 und dem Widerlager 704 gleich der Summe der Segmentlängen Is und Iz, es gilt also: L1 = Is + Iz (Länge Is des Gewinde-segments 35 + Länge Iz des Zahnsegments 61).

Zum erfindungsgemäßen Reibschweißen wird die Spanneinrichtung 71 in Rotation versetzt, so dass die Fügeflächen 28 gegeneinander reibend relativ zueinander rotieren. Die dabei frei werdende Reibungswärme ist abhängig von der Rotationsgeschwindigkeit und der Anpresskraft F.

Zunächst wird zum Anreiben die Anpresskraft F in Höhe einer Anreibkraft F1 ausgeübt, welche beispielsweise zwischen 10kN bis 30 kN betragen kann. Dadurch erfolgt eine Vergleichmäßigung der Oberflächen der Fügeflächen 28. Das Anreiben kann für eine Zeitdauer von weniger als 3 Sekunden erfolgen.

Anschließend wird zum Wärmeeinbringungsreiben die Anpresskraft F auf eine Einbringungskraft F2 erhöht, die etwa das 5- bis 12-fache, bevorzugt das 6- bis 11-fache der Anreibkraft F1 betragen kann. Das Wärmemeinbringungsreiben erfolgt ausreichend lange, bis an den Fügeflächen 28 die gewünschte Prozesstemperatur zum Verschweißen von Stahl erreicht ist. Dabei kann eine feste Zeitdauer vorgegeben werden, oder es erfolgt eine Zeitregelung über die gemessene Temperatur. Zeitdauern von weniger als 15 Sekunden werden dabei bevorzugt eingehalten.

Beim Erreichen der Prozesstemperatur wird die Anpresskraft F auf das 10- bis 20-fache, bevorzugt das 17-fache der Anreibkraft F1 erhöht. Durch das zwischen den Fügeflächen 28 an der Fügestelle 27 aufschmelzende Material erfolgt eine Stauchung, bei der sich das Zahnsegment 61 und das Gewindesegment 35 unter Verformung an der Fügestelle 27 gegeneinander bewegen, so dass die Startlänge L1 verkürzt wird. Gemäß dem erfindungsgemäßen, weggesteuerten Verfahren wird nur eine definierte Verkürzung zugelassen, bis eine vorgegebene Ziellänge L2 erreicht wird. Die Verkürzung ist der sogenannte Fügeweg X, welcher der Differenz zwischen der Startlänge L1 und der Ziellänge L2 entspricht: X = L1 - L2.

Der Endzustand, bei dem die Gesamtlänge L2 erreicht ist, ist in Figur 27 dargestellt. Die Ziellänge L2 entspricht der Zahnstangen-Länge Z einer Zahnstange 2, wie sie beispielsweise in Figur 2 oder in Figur 41 gezeigt ist, wobei der Schaftabschnitt 24 eine gegenüber der Segmentlänge Is duch das Schweißen verkürzte Schaftabschnitt-Länge S hat, und der Verzahnungsabschnitt 21 eine Verzahnungsabschnitt-Länge V hat, die kürzer ist als die Segmentlänge Iz.

Beim Verschweißen ist an der Fügestelle 27 Material radial herausgequetscht worden und bildet einen umlaufenden Schweißwulst 271.

In Figur 28 ist schematisch ein Härteprofil dargestellt, welches durch das erfindungsgemäße Reibschweißen an der Fügestelle 27 erzeugt werden kann. Durch das Reibschweißen erfolgt ein zur Gefügeumwandlung des Stahls relevanter Wärmeeintrag in Richtung der Längsachse L bis in eine Wärmeeinflusszone 91 und 92 eines Schaftabschnitts 24 bzw. eines Verzahnungsabschnitts 21. Erfindungsgemäß werden die Schweißparameter wie Rotationsgeschwindigkeit und Anpresskraft F bevorzugt so vorgegeben, dass die Wärmeeinflusszonen 91 und 92 maximal auf 250° C erwärmt werden. Die Wärmeeinflusszonen 91 und 92 haben beim erfindungsgemäßen Verfahren bevorzugt eine maximale Breite von 0,25 x ds, wobei ds den Durchmesser eines Segments 21 bzw. 24 angibt.

Am stärksten ist die Erwärmung in dem radial außen liegenden Umfangsbereich in unmittelbarer Nachbarschaft zur Fügestelle 27. In diesem koaxial umlaufenden Randbereich 93 wird eine Aufhärtung gegenüber dem Grundmaterial von maximal 200 HV1 zugelassen. Für den Kernbereich 94, der sich zentral innerhalb des Randbereichs 93 befindet, wird eine Aufhärtung von maximal 250HV1 zugelassen. Dadurch, dass die Aufhärtung in dem Randbereich 93 geringer ist als im Kernbereich 94, wird die Bildung metallurgischer Kerben vermieden und eine höhere Belastbarkeit erreicht.

Mit Vorteil wird durch die Verfahrensführung eine Zahnstange für eine Kraftfahrzeuglenkung dargestellt, die aus zwei mittels Reibschweißen miteinander verbundenen Segmenten, beispielsweise einem Zahnsegment 61 oder Zahnsegment 63 mit einem Schaftsegment 62, gebildet ist, wobei in einem Abstand der größer als 0,3 multipliziert mit dem Segmentdurchmesser ds des Segmentes mit dem kleinerem Durchmesser, gemessen von der Mitte der Schweißnaht, die maximale Mikrohärte in der Längsachse L weniger als 200 HV1 größer ist als die Mikrohärte in der Längsachse in einem Abstand vom 1,5 fachen des Segmentdurchmessers ds des Segmentes mit dem kleineren Durchmesser. Bevorzugt beträgt die Vergrößerung der Härte weniger als 120 HV1.

Besonders bevorzugt ist es dabei, wenn in einem Abstand der größer als 0,3 multipliziert mit dem Segmentdurchmesser ds des Segmentes mit dem kleinerem Durchmesser, gemessen von der Mitte der Schweißnaht, die maximale Mikrohärte in der Oberfläche weniger als 250 HV1 größer ist als die Mikrohärte in der Oberfläche in einem Abstand vom 1,5 fachen des Segmentdurchmessers ds des jeweiligen Segmentes. Bevorzugt beträgt die Vergrößerung der Härte weniger als 180 HV1.

Figur 29 zeigt ein Zahnsegment 61 in perspektivischer Ansicht. Dieses weist Positionierelemente 220 auf, welche positions- und maßgenau relativ zu den Funktionsflächen der Verzahnung 22, des Rückens 23, der Fügefläche 28 oder dergleichen angeordnet ist. Die Positionierelemente 220 können beim Schmieden des Zahnsegments 61 auf einfache Weise mit ausgeformt werden. Weiterhin können die Positionierungselemente 220 durch geeignete Bearbeitungsverfahren wie Schleifen, Erodieren oder dergleichen als präzise Referenzflächen ausgebildet sein und hinsichtlich Form und Anordnung optimiert sein als Spannflächen zum Einspannen in einer Spannvorrichtung, beispielsweise von formschlüssig an- oder eingreifenden Spannelementen, wie die Spannelemente 701, 702, 703, 711, 712 oder 713 gemäß Figur 26 und 27.

Figur 30 zeigt eine Ausführung einer gebauten Zahnstange 20, welche einen Verzahnungsabschnitt 21 und einen damit als Schaftabschnitt verbundenen zweiten Verzahnungsabschnitt 213 aufweist. Der Verzahnungsabschnitt 21 und der Verzahnungsabschnitt 213 sind mittels Reibschweißen an der Fügestelle 27 verbunden. Sowohl der Verzahnungsabschnitt 21 als auch der Verzahnungsabschnitt 213 weisen eine Verzahnung auf, die durch mechanische Bearbeitung, beispielsweise durch Fräsen, eingebracht wurden sind. Es ist ebenfalls denkbar und möglich, einen Verzahnungsabschnitt mit gefräster Verzahnung mit einem geschmiedeten Verzahnungsabschnitt mittels Reibschweißen zu verbinden.

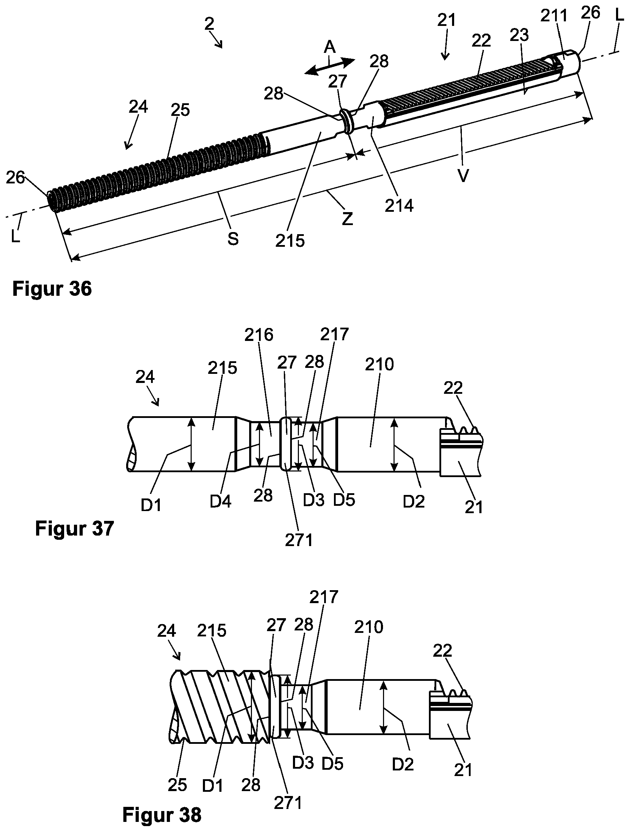

Die Figuren 36 und 37 zeigen eine erfindungsgemäß hergestellte Zahnstange in einer weiteren Ausführungsform. Die Zahnstange 2 weist einen Verzahnungsabschnitt 21 auf, der auf einer Seite mit einer Verzahnung 22 versehen ist, die sich in Längsrichtung A erstreckt. Weiterhin weist die Zahnstange 2 einen Schaftabschnitt 24 auf, der in dem in Figur 41 gezeigten Beispiel ein Gewinde 25 aufweist und auch als Gewindeabschnitt 24 bezeichnet wird. Der Verzahnungsabschnitt 21 weist einen Übergangsbereich 210 auf, der einen reduzierten Durchmesserabschnitt 217 am freien Ende des Übergangsabschnitts 210 umfasst. Der reduzierte Durchmesserabschnitt 214 weist einen kleineren Durchmesser D5 auf als der Übergangsabschnitt 210 mit dem Durchmesser D2. Der Schaftabschnitt 22 weist einen Übergangsbereich 215 auf, der einen reduzierten Durchmesserabschnitt 216 am freien Ende des Übergangsabschnitts 215 umfasst. Der reduzierte Durchmesserabschnitt 216 weist einen kleineren Durchmesser D4 auf als der Übergangsabschnitt 216 mit dem Durchmesser D1. Der Verzahnungsabschnitt 21 und der Schaftabschnitt 22 sind in einer Fügestelle 27 an ihren in axialer Richtung einander zugewandten Enden der reduzierten Durchmesserabschnitt 216, 217 mit ihren Fügeflächen 28 miteinander durch Reibschweißen verbunden. Beim Verschweißen ist an der Fügestelle 27 Material radial herausgequetscht worden und bildet einen umlaufenden Schweißwulst 271 mit dem Hüllkreisdurchmesser D3. Dieser Hüllkreisdurchmesser D3 der Schweißwulst 271 ist kleiner als der Durchmesser D1 des reduzierten Durchmesserabschnitts 216 und kleiner als der Durchmesser D2 des reduzierten Durchmesserabschnitts 214. Der Hüllkreisdurchmesser D3 ist größer als der Durchmesser D4 des reduzierten Durchmesserabschnitts 216 und größer als der Durchmesser D5 des reduzierten Durchmesserabschnitts. Dadurch, dass der Hüllkreisdurchmesser D3 kleiner ist als die Durchmesser D1, D2 ist eine mechanische Nacharbeit der Schweißwulst 217 nicht erforderlich, da die Schweißwulst 271 nicht radial weiter nach außen vorsteht als die Übergangsbereiche 210, 215.

In der Figur 38 ist eine alternative Ausführungsform einer Zahnstange 2 ähnlich den Figuren 41 und 42 in einer Detailansicht dargestellt. Der Hüllkreisdurchmesser D3 ist größer als der Durchmesser D5 des reduzierten Durchmesserabschnitts 217 und der Durchmesser D2 des Übergangsabschnitts 210 ausgebildet. Erfindungsgemäß ist der Hüllkreisdurchmesser D3 kleiner als der Durchmesser D1 des Übergangsbereichs 215 des Schaftabschnitts 24. Der Übergangsbereich 215 des Schaftabschnitts 24 weist das Gewinde 25 auf, welches sich in dieser Ausführungsform über die gesamte Länge des Schaftabschnitts 24 erstreckt. Der Übergangsbereich stellt somit den angrenzenden Abschnitt des Schaftabschnitts zur Fügestelle 27 dar. Dadurch, dass der Hüllkreisdurchmesser D3 der Schweißwulst 271 kleiner ist als der Durchmesser D1 des Übergangsbereichs 215, kann erreicht werden, dass die Schweißwulst 271 nicht störend radial nach außen hervor steht und somit ein zusätzliches Zerspanen der Schweißwulst 271 nicht erforderlich ist, da die Schweißwulst 271 erfindungsgemäß nicht weiter radial nach außen hervorsteht als der Übergangsbereich 215.

## Patentansprüche

1. Verfahren zum Formen einer Zahnstange (2) für ein Lenkgetriebe eines Kraftfahrzeugs mit einem Verzahnungsabschnitt (21), der eine sich entlang einer Längsachse (L) erstreckende Verzahnung (22), die eine quer zur Längsachse (L) gemessene Verzahnungsbreite (b) hat, und einen der Verzahnung (22) gegenüberliegenden, zumindest in seiner Grundform zylindersegmentförmigen Rücken (23) mit einem Rückenradius (R) und eine Rückenbreite aufweist,
bei dem ein zylindrischer Rohling (3) mit einem Rohradius (r) in einer Kavität eines in einer Trennebene (T) parallel zur Längsachse (L) geteilten Gesenks (5) umgeformt wird zwischen einem Zahngesenkteil (51) mit einer Zahnformausnehmung (52) zum Formen der Verzahnung (22) und einem Rückengesenkteil (53, 531) mit einer Rückenformausnehmung (54) zum Formen des Rückens (23), die eine zylindersegmentförmige Grundform mit dem Rückenradius (R) hat,
wobei zur Umformung der Rohling (3) in einer Offenstellung des Gesenks zwischen die bezüglich der Trennebene (T) voneinander beabstandeten Zahn- und Rückenformausnehmungen (52, 54) eingesetzt wird und anschließend das Zahngesenkteil (51) und das Rückengesenkteil (53, 531) in einem Schmiedehub zum Schließen der Kavität in Schließrichtung in eine Schließstellung bewegt werden, wobei der Rückenradius (R) der Rückenformausnehmung (54) größer ist als der Rohradius (r) des Rohlings (3) **gekennzeichnet dadurch,**
**dass** die Rückenbreite (2 x R) und die Verzahnungsbreite (b) quer zur Längsachse (L) gemessen breiter ist als der zweifache Rohradius (r) des Rohlings (3).

2. Verfahren nach Anspruch 1, **dadurch gekennzeichnet, dass** der Rücken (23) im Querschnitt D-förmig ausgebildet ist.

3. Verfahren nach Anspruch 1, **dadurch gekennzeichnet, dass** der Rücken (23) im Querschnitt V-förmig ausgebildet ist.

4. Verfahren nach einem der vorangehenden Ansprüche, **dadurch gekennzeichnet, dass** die Verzahnungsbreite (b) des Zahngesenkteils (51) quer zur Längsachse (L) gemessen größer ist als der Rohradius (r).

5. Verfahren nach einem der vorangehenden Ansprüche, **dadurch gekennzeichnet, dass** der Rohling (3) mindestens einen Übergangsabschnitt (210,211) aufweist, der benachbart zum Zahn- und Rückengesenkteil (51, 52) in einer Halteeinrichtung (55, 56) gehaltert ist.

6. Verfahren nach einem der vorangehenden Ansprüche, **dadurch gekennzeichnet, dass** die Rückenachse (Q) bei der Umformung im Verzahnungsbereich relativ zur Längsachse (L) um einen Abstand (c1, c2) radial in Richtung zum Rücken versetzt wird.

7. Verfahren nach einem der vorangehenden Ansprüche, **dadurch gekennzeichnet, dass** der Rohling (3) als Stangen- oder Rohrabschnitt bereitgestellt wird.

8. Verfahren nach einem der vorangehenden Ansprüche, **dadurch gekennzeichnet, dass** der Rohling (3) bearbeitet wird zur Ausbildung eines sich einstückig in Richtung der Längsachse (L) an den Verzahnungsabschnitt (21) anschließenden Schaftabschnitts (22).

9. Verfahren nach einem der vorangehenden Ansprüche, **dadurch gekennzeichnet, dass** ein Verzahnungsabschnitt (21) an einem Zahnsegment (61) ausgebildet wird, welches mit zumindest einem weiteren Funktionssegment verbunden wird.

10. Zahnstange (2) für ein Lenkgetriebe eines Kraftfahrzeugs mit einem Verzahnungsabschnitt (21), der eine sich entlang einer Längsachse (L) erstreckende Verzahnung (22) aufweist, wobei die Verzahnung (22) eine Verzahnungsbreite (b) aufweist und das der Verzahnungsabschnitt (21) einen frei umgeformten Grat mit einer Gratbreite (GB) aufweist, **gekennzeichnet dadurch,**
**dass** die Gratbreite (GB) gleich oder weniger als 25% der Verzahnungsbreite (b) ist.

11. Zahnstange nach Anspruch 10, **dadurch gekennzeichnet, dass** die Gratbreite (GB) gleich oder weniger als 18% der Verzahnungsbreite (b) ist.

12. Zahnstange nach Anspruch 10, **dadurch gekennzeichnet, dass** die Gratbreite (GB) gleich oder weniger als 10% der Verzahnungsbreite (b) ist.

13. Zahnstange nach Anspruch 10, **dadurch gekennzeichnet, dass** die Gratbreite (GB) größer als 0,5% der Verzahnungsbreite (b) ist.

## Claims

1. Method for shaping a rack (2) for a steering gear of a motor vehicle, said rack (2) having a toothed portion (21) which has a toothing (22) that extends along a longitudinal axis (L) and has a toothing width (b) measured transversely to the longitudinal axis (L), and a back (23) which is opposite the toothing (22) and in terms of the basic shape thereof is of a cylinder-segment shape and which has a back radius (R) and a back width;
in which method a cylindrical blank (3) having a blank radius (r) in a die (5) which is divided in a separation plane (T) parallel to the longitudinal axis (L) is formed between a tooth die part (51), having a tooth mold clearance (52) for shaping the toothing (22), and a back die part (53, 531), having a back mold clearance (54) which for shaping the back (23) has a cylinder-segment basic shape having the back radius (R);
wherein for forming the blank (3) in an open position of the die is inserted between the tooth mold clearances (52) and the back mold clearances (54), which are distanced from each other with respect to the separation plane (T), and the tooth die part (51) and the back die part (53, 531) for closing the cavity in the closing direction are moved in one forging stroke to a closed position, wherein the back radius (R) of the back mold clearance (54) is larger than the blank radius (r) of the blank (3),
**characterized in that**
the back width (2xR) plus the toothing width (b) measured transversely to the longitudinal axis (L) is wider than double the blank radius (r) of the blank (3).

2. Method according to Claim 1, **characterized in that** the back (23) in the cross section is configured so as to be D-shaped.

3. Method according to Claim 1, **characterized in that** the back (23) in the cross section is configured so as to be V-shaped.

4. Method according to one of the preceding claims, **characterized in that** the toothing width (b) of the tooth die part (51) measured transversely to the longitudinal axis (L) is larger than the blank radius (r).

5. Method according to one of the preceding claims, **characterized in that** the blank (3) has at least one transition portion (210, 211) which in a holding installation (55, 56) is mounted so as to be adjacent to the tooth die part (51) and the back die part (52).

6. Method according to one of the preceding claims, **characterized in that** the back axis (Q) when forming in the toothed region is radially offset relative to the longitudinal axis (L) by a spacing (c1, c2) in the direction of the back.

7. Method according to one of the preceding claims, **characterized in that** the blank (3) is provided as a portion of a bar or a tube.

8. Method according to one of the preceding claims, **characterized in that** the blank (3) is machined for configuring a shank portion (22) which in the direction of the longitudinal axis (L) integrally adjoins the toothed portion (21).

9. Method according to one of the preceding claims, **characterized in that** a toothed portion (21) is configured on a toothed segment (61) which is connected to at least one further functional segment.

10. Rack (2) for a steering gear of a motor vehicle, said rack (2) having a toothed portion (21) which has a toothing (22) that extends along a longitudinal axis (L), wherein the toothing (22) has a toothing width (b) and wherein the toothed portion (21) has a freely formed burr having a burr width (GB), **characterized in that** the burr width (GB) is equal to or less than 25% of the toothing width (b).

11. Rack according to Claim 10, **characterized in that** the burr width (GB) is equal to or less than 18% of the toothing width (b).

12. Rack according to Claim 10, **characterized in that** the burr width (GB) is equal to or less than 10% of the toothing width (b).

13. Rack according to Claim 10, **characterized in that** the burr width (GB) is more than 0.5% of the toothing width (b).

## Revendications

1. Procédé de formation d'une crémaillère (2) destinée à un mécanisme de direction d'un véhicule automobile, comprenant une partie de denture (21) qui présente une denture (22) s'étendant le long d'un axe longitudinal (L) d'une largeur de denture (b), mesurée transversalement à l'axe longitudinal (L), et un dos (23) opposé à la denture (22), en forme de segment de cylindre au moins dans sa forme de base, ayant un rayon de dos (R) et une largeur de dos,
dans lequel une ébauche cylindrique (3) ayant un rayon brut (r) est mise en forme dans une cavité d'une matrice (5) divisée dans un plan de séparation (T) parallèle à l'axe longitudinal (L), entre une partie de matrice de dent (51) munie d'un évidement de formation de dent (52) pour former la denture (22) et une partie de matrice de dos (53, 531) munie d'un évidement de formation de dos (54) pour former le dos (23), qui présente une forme de base en forme de segment de cylindre ayant le rayon de dos (R),
dans lequel, pour la mise en forme, lorsque la matrice est en position ouverte, l'ébauche (3) est insérée entre les évidements de formation de dent et de dos (52, 54), espacés les uns des autres par rapport au plan de séparation (T), et ensuite, la partie de matrice de dent (51) et la partie de matrice de dos (53, 531) sont déplacées lors d'une course de forgeage pour fermer la cavité dans la direction de fermeture dans une position de fermeture, le rayon de dos (R) de l'évidement de formation de dos (54) étant supérieur au rayon brut (r) de l'ébauche (3),
**caractérisé en ce que** la largeur de dos (2 x R) et la largeur de denture (b), mesurées transversalement à l'axe longitudinal (L), sont plus larges que deux fois le rayon brut (r) de l'ébauche (3).

2. Procédé selon la revendication 1, **caractérisé en ce que** le dos (23) est réalisé en forme de D en section transversale.

3. Procédé selon la revendication 1, **caractérisé en ce que** le dos (23) est réalisé en forme de V en section transversale.

4. Procédé selon l'une quelconque des revendications précédentes, **caractérisé en ce que** la largeur de denture (b) de la partie de matrice de dent (51), mesurée transversalement à l'axe longitudinal (L), est supérieure au rayon brut (r).

5. Procédé selon l'une quelconque des revendications précédentes, **caractérisé en ce que** l'ébauche (3) présente au moins une partie de transition (210, 211) qui est maintenue à côté de la partie de matrice de dent et de la partie de matrice de dos (51, 52) dans un dispositif de maintien (55, 56).

6. Procédé selon l'une quelconque des revendications précédentes, **caractérisé en ce que**, lors de la mise en forme, l'axe de dos (Q) est décalé dans la zone de denture par rapport à l'axe longitudinal (L) d'une distance (c1, c2) radialement en direction du dos.

7. Procédé selon l'une quelconque des revendications précédentes, **caractérisé en ce que** l'ébauche (3) est prévue sous la forme d'une partie de barre ou de tuyau.

8. Procédé selon l'une quelconque des revendications précédentes, **caractérisé en ce que** l'ébauche (3) est usinée pour réaliser une partie de manche (22) adjacente intégralement à la partie de denture (21) dans la direction de l'axe longitudinal (L).

9. Procédé selon l'une quelconque des revendications précédentes, **caractérisé en ce qu'**une partie de denture (21) est réalisée sur un segment de dent (61) qui est relié à au moins un autre segment fonctionnel.

10. Crémaillère (2) destinée à un mécanisme de direction d'un véhicule automobile, comprenant une partie de denture (21) qui présente une denture (22) s'étendant le long d'un axe longitudinal (L), la denture (22) présentant une largeur de denture (b), et la partie de denture (21) présentant une arête mise en forme librement et ayant une largeur d'arête (GB),
**caractérisée en ce que** la largeur d'arête (GB) est égale ou inférieure à 25 % de la largeur de denture (b).

11. Crémaillère selon la revendication 10, **caractérisée en ce que** la largeur d'arête (GB) est égale ou inférieure à 18 % de la largeur de denture (b).

12. Crémaillère selon la revendication 10, **caractérisée en ce que** la largeur d'arête (GB) est égale ou inférieure à 10 % de la largeur de denture (b).

13. Crémaillère selon la revendication 10, **caractérisée en ce que** la largeur d'arête (GB) est supérieure à 0,5 % de la largeur de denture (b).
